# FASCICULE DE BREVET EUROPEEN

(11) **EP 1 913 433 B1**
(45) Date de publication et mention de la délivrance du brevet: **02.09.2015**
(21) Numéro de dépôt: 06764313.0
(22) Date de dépôt: 07.08.2006
(51) Int. Cl.: G02B 26/02, G02B 3/14, G02B 26/08

(54) **DISPOSITIF D'ACTIONNEMENT A MEMBRANE FLEXIBLE COMMANDEE PAR ELECTROMOUILLAGE**
BETÄTIGUNGSEINRICHTUNG MIT EINER DURCH ELEKTROBENÄSSUNG GESTEUERTEN FLEXIBLEN MEMBRAN
ACTUATING DEVICE HAVING A FLEXIBLE DIAPHRAGM CONTROLLED BY ELECTROWETTING

(30) Priorité: 08.08.2005 FR 0552463
(43) Date de publication de la demande: 23.04.2008
(73) Titulaire: Commissariat à l'Énergie Atomique et aux Énergies Alternatives, 75015 Paris (FR)
(72) Inventeur: VALETTE, Serge, F-38100 Grenoble (FR); FOUILLET, Yves, F-38340 Voreppe (FR); RACCURT, Olivier, 38730 Chelieu (FR); BERTHIER, Jean, F-38240 Meylan (FR)
(74) Mandataire: Ahner, Philippe
(86) Numéro de dépôt international: PCT/EP2006/065118
(87) Numéro de publication internationale: WO 2007/017495

(56) Documents cités:
- EP-A- 1 306 704
- WO-A-2004/099846
- WO-A-2004/099847
- US-A1- 2004 091 201
- US-A1- 2004 179 259
- US-A1- 2005 100 270
- US-B1- 6 404 941

## Description

### DOMAINE TECHNIQUE

L'invention concerne un dispositif ou un micro-dispositif d'actionnement comportant une membrane flexible, dont le profil peut être contrôlé par l'intermédiaire du phénomène d'électromouillage.

L'invention concerne notamment le domaine des dispositifs optiques dont les propriétés optiques sont susceptibles d'être contrôlées par électromouillage et met en oeuvre en particulier un dispositif optique à plusieurs positions ou un dispositif d'optique adaptative, à membrane flexible apte à réfléchir ou à transmettre des rayons lumineux incidents.

L'invention concerne également un dispositif interrupteur, en particulier optique ou électrique, dont l'ouverture et la fermeture est susceptible d'être commandé par une membrane flexible, à profil modulable par électromouillage.

L'invention concerne également un dispositif de pompe ou/et de vanne commandée par une membrane flexible à profil modulable par électromouillage.

### ART ANTERIEUR

Dans un article de B. Berge intitulé « Electrocapillarité et mouillage de films isolants par l'eau » publié en 1993 dans C.R. Acad. Sci. Paris, t.137 série II pages 157 à 163, un dispositif comprenant une goutte d'un liquide conducteur posée sur un film diélectrique recouvrant une électrode plane, est présenté. Une tension électrique appliquée entre la goutte de liquide et l'électrode peut permettre de faire varier la mouillabilité du matériau diélectrique vis-à-vis du Liquide. Ce phénomène est appelé « électromouillage ».

Le document EP 1 019 758 B1 divulgue une lentille à focale variable contrôlée électriquement, à l'aide du phénomène d'électromouillage. La lentille comprend une enceinte remplie d'un premier liquide, et d'un deuxième liquide sous forme d'une goutte non miscible avec le premier liquide, la forme de la goutte pouvant être modulée par l'intermédiaire du phénomène d'électromouillage.

Le document « Piston Motion Micromiror Based on Electrowetting of Liquid Metals », Zeng et al., journal of Microelectromechanical Systems, Vol. 14, n°2, Avril 2005, présente quant à lui un dispositif et un procédé de commande d'un micro-miroir, à l'aide du phénomène d'électromouillage. Le dispositif de commande comprend un support doté d'une électrode sur laquelle repose une goutte métallique à base de mercure. Le micro-miroir est formé d'un empilement rigide de couches minces reposant sur la goutte. Le micro-miroir peut être déplacé par rapport au support, et positionné à différentes distances de ce dernier, en fonction du potentiel appliqué sur l'électrode.

Les documents US 6 404 941 et US 2004 00 912 01 concernent aussi l'art antérieur*.*

### EXPOSÉ DE L'INVENTION

L'invention met en oeuvre un dispositif d'actionnement, à membrane flexible dont la forme est modulable par électromouillage.

L'invention est définie par les caractéristiques de la revendication 1.

Selon une possibilité, le deuxième fluide peut être par exemple un deuxième liquide, le premier liquide et le deuxième fluide étant de préférence non miscibles.

Selon une autre possibilité, le deuxième fluide peut être par exemple un gaz, par exemple de l'air ou de l'azote, ou un gaz inerte.

Selon une première variante de mise en oeuvre du dispositif d'actionnement, l'enceinte peut être fermée de sorte que la modulation du profil de la membrane peut être réalisée à volume de premier liquide et de deuxième fluide constant dans l'enceinte.

Selon une deuxième variante de mise en oeuvre du dispositif d'actionnement, l'enceinte peut être ouverte de sorte que la modulation du profil de la membrane peut être réalisée à volume de deuxième fluide variable et à volume de premier liquide constant dans l'enceinte. Selon cette deuxième variante, le dispositif d'actionnement peut comporter au moins un réservoir communicant avec l'enceinte. Ce réservoir peut être partiellement rempli du deuxième fluide et jouer le rôle de vase d'expansion.

Les moyens électriques peuvent comprendre une ou plusieurs électrodes.

Selon une alternative de mise en oeuvre du dispositif, une ou plusieurs électrodes peuvent être intégrées au support et situés en regard respectivement desdites une ou plusieurs gouttes.

Selon une possibilité de mise en oeuvre du dispositif, une ou plusieurs électrodes peuvent être intégrées à la membrane.

Selon une variante de mise en oeuvre, le dispositif peut comprendre une matrice d'électrodes et une matrice de gouttes située en regard de la matrice d'électrodes. Cette disposition peut permettre notamment de faire adopter à la membrane un nombre important de profils différents.

Les électrodes peuvent être recouvertes par au moins une couche diélectrique.

Lesdits moyens électriques peuvent comprendre également des moyens de commande de la polarisation des électrodes. Ces moyens de commande de la polarisation des électrodes peuvent comprendre un ou plusieurs moyens interrupteurs intégrés au support. Ces moyens de commande de la polarisation des électrodes peuvent également comprendre au moins un circuit d'adressage des électrodes.

Selon une possibilité de mise en oeuvre du dispositif d'actionnement, les moyens de commande de la polarisation des électrodes, sont susceptible de placer les électrodes dans un état de polarisation dans lequel au moins une première électrode est à un premier potentiel, au moins une autre électrode est à un deuxième potentiel, différent du premier potentiel. Selon cette possibilité de mise en oeuvre, les électrodes sont susceptibles d'être commandées indépendamment les unes des autres par les moyens de commande de polarisation.

Selon une alternative de mise en oeuvre du dispositif, la membrane peut être également dotée d'une ou plusieurs électrodes en regard des électrodes intégrées au support. Cela peut permettre de moduler la forme de la membrane à la fois par le phénomène d'électromouillage et par une attraction entre les électrodes du support et les électrodes de la membrane.

Selon une possibilité de mise en oeuvre, le dispositif d'actionnement peut comprendre en outre au moins un couvercle en regard du support apte à maintenir l'enceinte remplie de fluides, par exemple de liquides dans un espace clos.

Le couvercle de protection peut éventuellement comprendre au moins une couche anti-réfléchissante ou être accolé à au moins une couche anti-réfléchissante.

Le dispositif d'actionnement et en particulier l'enceinte remplie de fluides, par exemple de liquides, est susceptible d'adopter plusieurs formes, suivant notamment le profil de la membrane et la forme des gouttes.

Le dispositif est susceptible d'adopter au moins une position de repos par exemple pour laquelle les électrodes ne sont pas polarisées.

Selon une possibilité de mise en oeuvre du dispositif, la membrane peut être parallèle à un plan principal du support lors de la position de repos.

Le dispositif d'actionnement est susceptible d'adopter au moins une position dans laquelle la membrane comporte un profil courbe. Selon une variante, la membrane comporte un profil courbe lors de la position de repos.

Selon une variante, pour laquelle, dans la position de repos, une goutte est située en regard d'une zone de la membrane à une distance du support dite « distance de repos » sans être en contact avec la membrane, le dispositif suivant l'invention peut être apte à adopter au moins une autre position dans laquelle ladite goutte est en contact à la fois avec le support et la membrane, et maintient ladite zone de la membrane à une distance du support différente de ladite distance de repos.

Selon une autre variante, dans la position de repos, au moins une goutte du premier liquide peut être en contact avec le support et avec la membrane.

Selon une variante différente, dans la position de repos, les gouttes peuvent être en contact avec le support et ne pas être en contact avec la membrane.

Le dispositif d'actionnement suivant l'invention peut être apte à adopter au moins une position dans laquelle au moins une goutte est en contact à la fois avec le support et avec la membrane et maintient une zone de la membrane à une distance donnée du support, et au moins une autre position dans laquelle ladite goutte est en contact à la fois avec le support et avec la membrane, et maintient ladite zone de la membrane à une autre distance du support différente de ladite distance donnée.

Selon une possibilité de mise en oeuvre du dispositif, les formes respectives des gouttes peuvent être commandées indépendamment les unes des autres par les moyens électriques. Les contraintes respectives que les gouttes sont susceptibles d'appliquer sur la membrane, peuvent être ainsi différentes entre elles.

Selon une possibilité, le dispositif d'actionnement suivant l'invention est susceptible d'adopter une position, différente de la position de repos, dans laquelle le profil de la membrane est différent dudit profil donné, et dans laquelle au moins une première goutte maintient une première zone de la membrane à une première distance du support, et au moins une autre goutte maintient une deuxième zone de la membrane à une deuxième distance du support, différente de la première distance.

Selon une possibilité, le dispositif d'actionnement est susceptible d'adopter au moins une position différente de la position de repos, dans laquelle la membrane comporte un profil sinueux.

L'invention met en oeuvre un dispositif optique comprenant une enceinte remplie de liquide comprenant une paroi flexible sous forme d'une membrane destinée à recevoir des rayons lumineux incidents et dont le profil peut être contrôlé par l'intermédiaire du phénomène d'électromouillage.

L'invention prévoit un dispositif d'optique adaptative comprenant un dispositif d'actionnement tel que défini plus haut.

Selon une première variante, le dispositif optique peut être destiné à fonctionner en transmission de rayons lumineux.

Selon cette première variante, la membrane peut être formée à base d'un matériau transparent vis-à-vis de rayons lumineux. Le support et/ou les électrodes peut ou peuvent être également formés à base d'un matériau transparent vis-à-vis de rayons lumineux.

Selon cette première variante de mise en oeuvre du dispositif optique, l'indice de réfraction n₁ du premier liquide et l'indice de réfraction n₂ du deuxième liquide, peuvent être égaux ou sensiblement égaux.

Selon une alternative de cette première variante, la membrane peut comprendre au moins une première couche anti-réfléchissante ou peut être accolée à au moins une première couche anti-réfléchissante. Le support peut également comporter au moins une deuxième couche anti-réfléchissante ou peut être accolé à au moins une deuxième couche anti-réfléchissante. Cette couche anti-réfléchissante ou ces couches anti-réfléchissantes peuvent permettre notamment de minimiser les pertes par réflexion lorsque le dispositif optique est utilisé en transmission. Selon la première variante, les indices de réfraction n₁ et n₂ du premier liquide et du deuxième liquide peuvent être éventuellement égaux ou sensiblement égaux.

Selon une deuxième variante, le dispositif optique peut être destiné à fonctionner en réflexion. Selon cette deuxième variante, la membrane peut comprendre une couche réfléchissante de rayons lumineux ou être accolée à une couche réfléchissante de rayons lumineux.

L'invention concerne également un dispositif ou micro-dispositif interrupteur électrique, comprenant :
- un dispositif d'actionnement tel que défini plus haut,
- au moins un élément conducteur de l'électricité rattaché à la membrane du dispositif d'actionnement,
- au moins une première zone conductrice et au moins une deuxième zone conductrice disjointe de la première zone conductrice, le dispositif interrupteur étant apte à adopter au moins une première position dans laquelle l'élément conducteur de l'électricité est en contact avec la première zone conductrice et la deuxième zone conductrice, et au moins une deuxième position dans laquelle la première zone conductrice et/ou la deuxième zone conductrice n'est pas en contact, ou ne sont pas en contact, avec l'élément conducteur.

L'invention concerne également un dispositif ou micro-dispositif interrupteur optique, comprenant :
- un dispositif d'actionnement tel que défini plus haut,
- au moins un élément rattaché à la membrane du dispositif d'actionnement, le dispositif interrupteur étant apte à adopter au moins une première position dans laquelle ledit élément intercepte un faisceau optique, et au moins une deuxième position dans laquelle ledit élément et ledit faisceau ne se rencontrent pas.

L'invention concerne également un dispositif ou micro-dispositif de vanne, comprenant :
- un dispositif d'actionnement tel que défini plus haut,
- au moins une zone, formant avec la membrane au moins un canal dans lequel au moins un fluide est destiné à circuler, la membrane étant apte à adopter au moins une première position dite de canal « fermé » dans laquelle la membrane ou un élément rattaché à la membrane, est en contact avec ladite zone, et au moins une deuxième position dite de canal « ouvert » dans laquelle la membrane ou ledit élément rattaché à la membrane n'est pas en contact avec ladite zone.

L'invention concerne également un dispositif ou micro-dispositif de pompage comprenant :
- un dispositif d'actionnement tel que défini plus haut,
- au moins un élément formant piston rattaché à la membrane,
- au moins une chambre dite « chambre de travail » dans laquelle l'élément formant piston est apte à se déplacer.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- les figures 1A-1B illustrent différentes positions, qu'un dispositif suivant l'invention doté d'une enceinte remplie de liquide et à paroi flexible, est susceptible d'adopter,
- les figures 2 et 3, illustrent les variations des paramètres de forme dans un dispositif suivant l'invention, de gouttes comprises dans une enceinte à paroi flexible, remplie d'au moins un premier liquide et d'au moins un deuxième fluide,
- la figure 4 illustre une première variante de dispositif optique suivant l'invention, doté notamment d'une enceinte à paroi flexible, remplie d'au moins un premier liquide et d'au moins un deuxième fluide, comportant plusieurs gouttes dont les formes respectives sont susceptibles d'être modulées par électromouillage,

- la figure 5 illustre une deuxième variante de dispositif suivant l'invention, doté notamment doté d'une enceinte liquide à paroi flexible, comportant plusieurs gouttes dont les formes respectives sont susceptible d'être contrôlées électriquement de manière indépendante les unes par rapport aux autres,
- la figure 6 illustre une troisième variante de dispositif suivant l'invention, doté notamment d'un couvercle de protection,
- la figure 7 illustre une quatrième variante de dispositif suivant l'invention, doté notamment d'une enceinte, comportant au moins un premier liquide et au moins un deuxième fluide, l'enceinte étant à paroi flexible et réfléchissante de rayons lumineux,
- la figure 8 illustre une cinquième variante de dispositif suivant l'invention, doté notamment d'une enceinte, comportant au moins un premier liquide et au moins un deuxième fluide, l'enceinte étant à paroi flexible dotée d'électrodes,
- la figure 9 illustre une sixième variante de dispositif suivant l'invention, doté notamment d'une enceinte, comportant au moins un premier liquide et au moins un deuxième fluide, l'enceinte étant à paroi flexible dotée d'électrodes,
- les figures 10A et 10B illustrent une septième variante de dispositif suivant l'invention, doté notamment d'une enceinte, comportant au moins un premier liquide et au moins un deuxième fluide, l'enceinte étant formée entre un support conducteur et une membrane flexible comprenant une couche jouant le rôle d'une électrode,
- les figures 11A et 11B illustrent un dispositif de vanne suivant l'invention, actionnée à l'aide d'une membrane flexible à profil modulable par électro-mouillage,
- les figures 12A et 12B illustrent une variante de dispositif de vanne suivant l'invention, actionnée à l'aide d'une membrane flexible à profil modulable par électro-mouillage,
- les figures 13A et 13B illustrent un dispositif de pompe suivant l'invention, actionnée à l'aide d'une membrane flexible à profil modulable par électro-mouillage,
- les figures 14A et 14B illustrent un dispositif d'interrupteur optique suivant l'invention, dont l'ouverture et la fermeture sont commandées à l'aide d'une membrane flexible à profil modulable par phénomène d'électro-mouillage,
- les figures 15A et 15B illustrent un dispositif d'interrupteur électrique suivant l'invention, dont l'ouverture et la fermeture sont commandées à l'aide d'une membrane flexible à profil modulable par phénomène d'électro-mouillage,
- les figures 16A à 16G, et 17A-17C illustrent des étapes d'un procédé de fabrication d'un dispositif d'actionnement suivant l'invention,
- les figures 18A à 18B illustrent une variante de dispositif actionneur à membrane flexible modulable par électromouillage.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

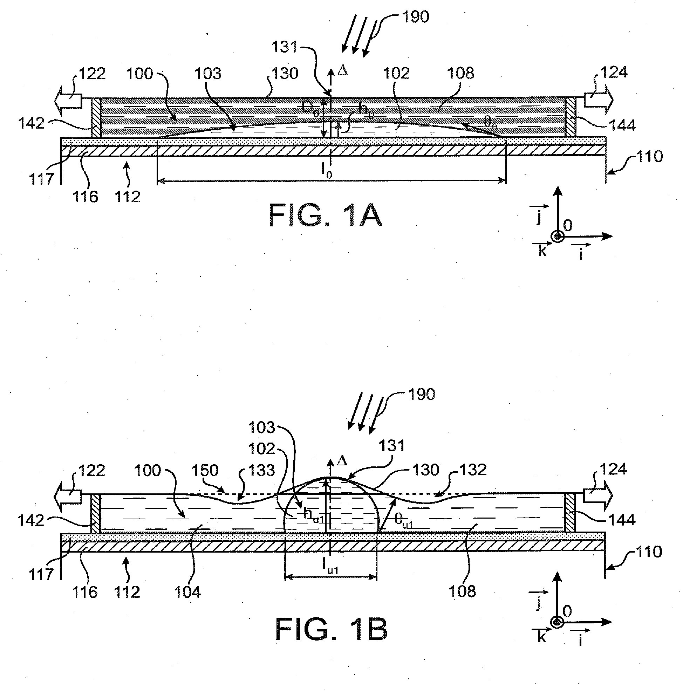

Un exemple de dispositif ou de micro-dispositif d'actionnement, à plusieurs positions, et à membrane flexible, est illustré, selon une vue en coupe, sur les figures 1A et 1B.

Ce dispositif comprend une enceinte 100 de volume V remplie par un premier liquide 102, et un deuxième liquide 108. Le premier liquide 102 et le deuxième liquide 108 sont de préférence non-miscibles. Selon une possibilité, le premier liquide 102 peut être un liquide non-conducteur ou faiblement conducteur de courant électrique, tandis que le deuxième liquide peut être un liquide conducteur de courant électrique. Selon un exemple, le premier liquide 102 et le deuxième liquide 108 peuvent être respectivement, une huile, et de l'eau.

L'enceinte 100 de volume V est formée entre un support 110 sur lequel reposent les liquides 102 et 108, et une membrane 130 située en regard du support 110 et rattachée à ce dernier. Le dispositif ou micro-dispositif d'actionnement comporte des éléments formés à partir de couche(s) mince(s).

Le support 110 peut comporter au moins une électrode 112 formée à partir d'une couche mince conductrice 116. L'électrode 112 est apte à être polarisée par des moyens de commande de polarisation (non représentés) et est recouverte d'une couche diélectrique 117, avec laquelle le premier liquide 102 et le deuxième liquide 108 sont en contact. Le dispositif peut également comprendre au moins une contre électrode recouverte d'une autre couche diélectrique en contact avec le liquide conducteur 108 (la contre électrode n'étant pas représentée sur les figures 1A et 1B). Selon une possibilité, la contre-électrode peut être intégrée ou accolée à la membrane 130. Selon une possibilité (non représentée) la contre-électrode peut être intégrée au support. Les moyens de commande de la polarisation des électrodes peuvent comprendre un ou plusieurs moyens interrupteurs intégrés au support. Ces moyens de commande de la polarisation des électrodes peuvent également comprendre au moins un circuit d'adressage des électrodes.

La couche diélectrique 117 peut avoir une épaisseur par exemple comprise entre 0,1 µm et 1 µm. Cette couche diélectrique 117 peut être par exemple à base d'oxyde de silicium ou de Si₃N₄. Le premier liquide 102 peut être sous forme d'au moins une goutte 103 en contact avec la couche diélectrique 117, et placée en regard de l'électrode 112. La mouillabilité de la couche diélectrique 117 vis-à-vis du deuxième liquide 108 peut être naturellement faible. Selon une possibilité, la couche diélectrique 117 peut être hydrophobe.

Le premier liquide 102 et le deuxième liquide 108 occupent respectivement un volume V₁, par exemple compris entre 1 nanolitre et plusieurs microlitres ou par exemple de l'ordre de 10 nl et un deuxième volume V₂, par exemple compris entre 10 nl et 100 µl ou par exemple de l'ordre de 100 nl.

La membrane 130 est flexible et apte à se déformer. Le profil de la membrane 130 est susceptible d'être modulé par électromouillage. La membrane 130 peut être par exemple à base de Si₃N₄ ou de PDMS (PDMS pour PolyDiMéthylSiloxane). La membrane 130 peut avoir une épaisseur par exemple comprise entre 10 nanomètres et 10 micromètres. La membrane 130 peut être rattachée à des plots ou des parois 142, 144, formées sur le support 110. Les parois 142, 144, peuvent être orthogonales à un plan principal du support 110 (tout au long de la description on appellera plan principal du support 110 un plan appartenant au support, parallèle à un plan [O; *̅i̅*̅; *̅k̅*̅]*,* d'un repère orthogonal [O; *̅i̅*̅; *̅j̅*̅; *̅k̅*̅])*.* Les parois 142, 144 peuvent permettrent de maintenir en tension la membrane 130 au dessus du support 110 (une contrainte de tension ou des forces de tension sur la membrane 130 étant représentées de manière schématique par des flèches 122, 124 sur les figures 1A et 1B).

Le dispositif d'actionnement est apte à adopter plusieurs positions, en fonction de l'état de polarisation de l'électrode 112. En faisant varier l'état de polarisation de l'électrode 112 ou la valeur d'une tension que l'on applique à cette électrode 112, on peut modifier la forme de la goutte 103 et amener cette dernière à induire une déformation ou une modification du profil de la membrane 130. Des moyens électriques peuvent être ainsi mis en oeuvre, pour moduler le profil de la membrane 130, par contrôle de la forme de la goutte 103.

Plusieurs paramètres de formes de la goutte 103 peuvent être modulés en fonction d'une tension U que l'on applique sur l'électrode 112. Tout au long de la présente description, parmi les paramètres de forme d'une goutte :
on appellera « surface externe » d'une goutte du premier liquide 102, une zone de cette goutte qui n'est pas en contact avec le support 110, et en particulier avec la couche diélectrique du support sur laquelle repose cette goutte,
on nommera « surface de contact » d'une goutte du premier liquide 102, une zone de cette goutte en contact avec le support 110, et en particulier avec la couche diélectrique du support sur laquelle repose cette goutte,
on appellera hauteur de la goutte en son centre, une dimension de la goutte mesurée dans un axe noté Δ parallèle au vecteur *̅j̅*̅ du repère orthogonal [O; *̅i̅*̅; *̅j̅*̅; *̅k̅*̅]), sensiblement perpendiculaire au plan principal du support 110,
on appellera « largeur » d'une goutte une dimension notée lu de la « surface de contact » de cette goutte mesurée dans un plan parallèle au plan [O; *̅i̅*̅; *̅k̅*̅]) du repère orthogonal [O; *̅i̅*̅; *̅j̅*̅; *̅k̅*̅])*.* ou mesurée dans le plan principal du support 110,
on appellera « rayon de courbure de la goutte » une dimension notée Ru égale à une valeur en un point courant de la surface externe de cette goutte, du rayon d'un cercle osculateur à cette surface,
on nommera également « angle de contact » θu de la goutte, un angle orienté que réalise un vecteur directeur, d'une tangente à la surface externe avec un autre vecteur du plan principal du support 110 ou de la couche diélectrique sur laquelle repose cette goutte, ladite tangente étant issue ou passant par un point de rencontre entre la surface externe et la surface de contact.

Sur la figure 1A, une position du dispositif, dite « de repos », pour laquelle l'électrode 112 n'est pas polarisée, est illustrée. Dans cet exemple de position de repos, la membrane 130 n'est pas en contact avec la goutte 103. La membrane 130 peut être également parallèle au plan principal du support 110 et comporter un profil plan, lorsque l'électrode 112 n'est pas polarisée ou lorsque le potentiel U est nul. Dans la position de repos, la goutte 103 de liquide 102 peut avoir par exemple l'allure d'une demi-sphère aplatie et être en contact avec la couche diélectrique 117 sur une surface de contact importante. Lors de la position de repos d'une goutte 103 par exemple de l'ordre de 2 nanolitres, cette denière peut avoir une hauteur en son centre hu = h0, avec h0 par exemple de l'ordre de 40 µm, un angle de contact θu = θ0, avec θ0 par exemple de l'ordre de 25°. Dans la position de repos, la largeur de la goutte 103 peut être quant à elle telle que lu = l₀, avec l₀ par exemple de l'ordre de 420 µm, tandis que le paramètre Ru de la goutte 103 peut être tel que Ru = R0, avec R0 par exemple de l'ordre de 356 µm.

Dans la position de repos, le sommet de la goutte 103 peut être en regard d'une zone notée 131 de la membrane 130, la zone 131 étant située à une distance D = D0, avec D0 par exemple comprise entre 0,5 µm et 100 µm du support que l'on appellera « distance de repos ».

La position de repos du dispositif d'actionnement selon l'invention n'est pas limitée à celle qui vient d'être décrite. Selon d'autres possibilités (non représentées sur la figure 1A), dans la position de repos, la membrane 130 peut comporter un profil courbe et/ou être en contact avec la goutte 103.

Un passage d'une position du dispositif, par exemple de la position de repos, à une autre position, peut être effectué en modifiant le potentiel appliqué sur l'électrode 112. Une variation de tension ou de potentiel sur l'électrode 112, entraîne une variation de la mouillabilité de la couche diélectrique 117 vis-à-vis du premier liquide 102, cette variation pouvant provoquer notamment une déformation de la goutte 103 de liquide 102. Une augmentation du potentiel de l'électrode 112 peut entraîner en particulier une diminution de la mouillabilité de la couche diélectrique 117 vis-à-vis du premier liquide 102, cette diminution pouvant se traduire par une diminution de la surface de contact de la goutte 103 avec la couche diélectrique 117 et peut entraîner un regroupement ou une concentration de la goutte 103 de premier liquide 102 sur elle même. Le regroupement de la goutte 103 peut amener cette dernière à entrer en contact avec la membrane 130 et exercer une pression sur cette dernière, la pression entraînant une déformation de la membrane 130 ou une modification du profil de la membrane 130. Selon un exemple, en augmentant le potentiel de l'électrode 112 on peut augmenter notamment la hauteur hu au centre de la goutte 103, et induire par l'intermédiaire de cette goutte 103 une pression sur la membrane 130, cette pression pouvant entraîner une modification du profil de la membrane 130. Certaines zones 131 de la membrane 130 en contact avec la goutte 103 et mises en contraintes par la goutte 103 peuvent s'éloigner du support. Selon une possibilité, en fonction notamment de la viscosité des liquides 102 et 108, de la flexibilité de la membrane 130, certaines autres zones 132, 133 de la membrane 103 peuvent se rapprocher du support 110. Selon une possibilité de mise en oeuvre, l'enceinte 100 peut être fermée. Dans ce cas, le passage d'une position, par exemple de la position de repos à d'autres positions de la membrane 130, peut être éventuellement réalisé à volume V constant.

Sur la figure 1B, une deuxième position du dispositif est illustrée. Pour cette position, l'électrode 112 est polarisée à l'aide d'une tension ou d'un potentiel U = U1 plus élevé que pour la première position, avec U1 par exemple de l'ordre 100 volts. Dans la deuxième position, le premier liquide 102 et la couche diélectrique 117 sont en contact sur une surface de contact plus faible que dans la position de repos. La goutte 103 de liquide 102 a également des bords plus concentrés que dans la première position. Dans la deuxième position, la goutte 103 de premier liquide 102 est en contact avec la membrane 130 et maintient une pression sur cette dernière. Dans la deuxième position, la membrane 130 peut avoir une forme différente de celle de la position de repos, par exemple une forme sinueuse ou onduleuse (la position de repos de la membrane étant indiquée sur la figure 1B par des traits discontinus référencés 150).

Dans la deuxième position, la goutte 103 de liquide 102 par exemple de l'ordre de 2 nanolitres peut avoir une hauteur en son centre hu = hu1, avec hu1 par exemple de l'ordre de 60 µm, plus élevée que la hauteur h0 dans la position de repos. Le sommet de la goutte 103 peut être en contact avec la zone 131 de la membrane 130, la zone 131 étant située à une distance Du sensiblement égale à Du1, du support plus élevée que la « distance de repos ». La goutte 103 de liquide 102 peut également avoir lors de la deuxième position, une largeur lu = lu1, avec lu1 par exemple de l'ordre de 285 µm, moins élevée que la largeur l₀ dans la position de repos. La goutte 103 de liquide 102 peut également avoir un rayon de courbure Ru = Ru1, avec Ru1 par exemple de l'ordre de 202 µm, (définie dans une direction parallèle à l'axe *̅i̅*̅ du repère orthogonal [O; *̅i̅*̅; *̅j̅*̅; *̅k̅*̅]) moins élevé que le rayon de courbure R₀ dans la première position. La goutte 103 de liquide 102 peut également réaliser un angle de contact θu = θu1, par exemple de l'ordre de 110°, plus élevé que l'angle de contact θ₀ dans la position de repos, avec θ₀ par exemple de l'ordre de 25°.

L'évolution de l'angle de contact θu que la goutte 103 est susceptible d'adopter en fonction d'états de polarisations U de l'électrode peut être par exemple tel que cos*θ*_{U} ≈ cos*θ*₀+*kU*² (1) (avec k une constante telle que k=2*10⁻⁵ et θ₀ la valeur de l'angle de contact θu de la goutte dans la position de repos).

Le dispositif suivant l'invention, n'est pas limité aux deux positions, et peut être éventuellement prévu pour adopter N positions différentes (avec N>2) ou une multitude de profils différents de membrane 130 et de forme de goutte 103.

Selon une mise en oeuvre particulière du dispositif d'actionnement, ce dernier peut être intégré ou appartenir à un dispositif optique ou d'optique adaptative, doté d'un système optique dont les propriétés peuvent être modulées par électromouillage. Le système optique peut être un système fonctionnant en transmission de rayons lumineux 190. Dans ce cas, la membrane 130 peut comprendre ou être formée et/ou être recouverte d'un matériau (non représenté) transparent, apte à laisser passer des rayons lumineux incidents. La membrane 130, associée au premier liquide 102 au deuxième liquide 108 et au support 110, forme un système optique, apte à dévier le chemin optique des rayons lumineux incidents 190. Dans le cas où le système optique fonctionne en transmission le premier liquide 102 et le deuxième liquide 108 peuvent être choisis avec des indices de réfractions n₁ et n₂ égaux ou sensiblement égaux ou proches. Par « proches » ou « sensiblement égaux », on entend que la différence (n₁-n₂) entre les indices de réfractions du premier liquide 102 et du deuxième liquide 108 n'est pas plus élevée que 0,05. La couche conductrice 116 peut être éventuellement à base d'un matériau transparent, par exemple de l'ITO (ITO pour Indium Tin Oxyde). La couche diélectrique 117 peut être également éventuellement à base d'un matériau transparent, par exemple tel que du Si₃N₄ ou du SiO₂. Les déformations de l'enceinte 100 remplie de fluides et dotée d'une paroi 130 flexible ou souple, entraînent une modification de la surface d'ondes optiques incidentes sur le système optique. Une telle déformation de la membrane 130 entraîne une modification des propriétés optiques du système optique, et notamment de la surface optique à travers laquelle les rayons lumineux 190 sont destinés par exemple à pénétrer.

Le passage d'une position, par exemple de la position de repos à d'autres positions du système optique et de la membrane 130, peut être éventuellement réalisé à volume V constant.

Dans la deuxième position (figure 1B), le profil de la membrane 130, confère des propriétés optiques au système optique, différentes de celles de la position de repos (figure 1A). Les rayons lumineux 190 traversant le système optique dans la deuxième position ont un chemin optique différent de ceux de rayons lumineux traversant le système optique dans la première position.

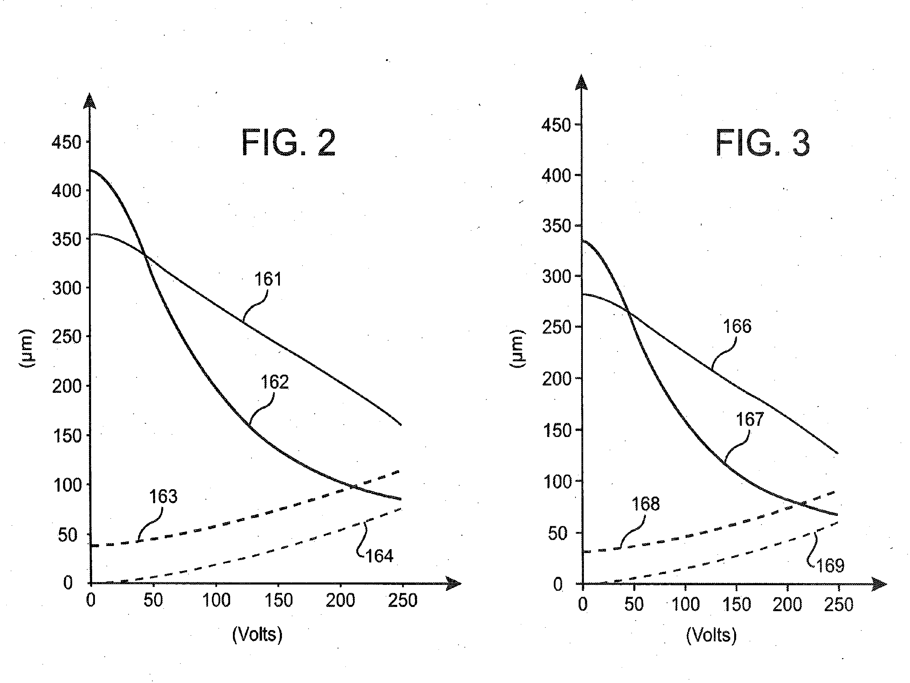

Sur la figure 2, sont exposées des courbes 161, 162, 163, 164, représentatives d'évolutions du rayon de courbure Ru, de la hauteur hu, de la longueur lu et d'un paramètre Δ*hu* = *hu - h*0*,* d'une goutte 103 de liquide 102 (avec h0 la hauteur au centre de la goutte lorsque cette dernière se trouve dans la position de repos) en fonction d'un potentiel U appliqué sur l'électrode 112, la goutte 103 ayant un volume V1 = 2 nanolitres, et un angle de contact dans la position de repos θ0 de l'ordre de 25°.

La figure 3, montre quant à elle des courbes 166, 167, 168, 169, représentatives d'évolutions du rayon de courbure Ru, de la hauteur hu, de la longueur lu et d'un paramètre Δ*hu=hu-h0,* d'une goutte 103 de liquide 102, en fonction d'un potentiel U appliqué sur l'électrode 112, la goutte 103 ayant un volume V1=1 nanolitre, et un angle de contact dans la position de repos θ0 de l'ordre de 25°.

Le dispositif d'actionnement, n'est pas limité à une seule goutte associée à une seule électrode et peut comprendre une pluralité de gouttes associées à une pluralité d'électrodes. Cela peut permettre par exemple de moduler le profil de la membrane sur des régions localisées de cette dernière et d'obtenir davantage de profils différents.

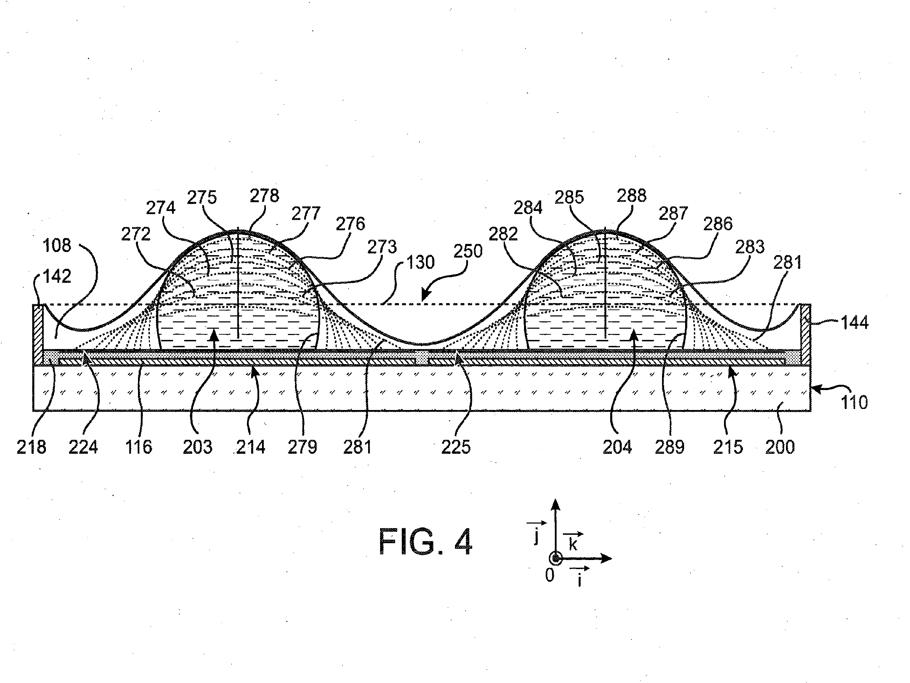

Une variante de l'exemple de dispositif décrit précédemment en liaison avec les figures 1A et 1B, est illustrée sur la figure 4. Selon cette variante, le volume V entre la membrane 130 et le support 110 comprend plusieurs gouttes 203 et 204 de liquide 102, réparties en regard, respectivement, d'électrodes 214, 215 du support 110. Les électrodes 214, 215 peuvent avoir un agencement matriciel. Pour cette variante de dispositif, le support 110 comprend un substrat 200, par exemple à base de verre, de silicium ou de plastique, sur lequel les électrodes 214, 215 sont agencées, par exemple en matrice. Ces électrodes 214, 215 peuvent être des zones conductrices disjointes ou distinctes formées à partir de la couche conductrice 116 et recouvertes par une couche de matériau diélectrique 218. Les gouttes 203 et 204 reposent respectivement sur des zones 224, 225 de la couche de matériau diélectrique 218. Dans cet exemple, la mouillabilité du matériau diélectrique 218 vis-à-vis du deuxième liquide 108 peut être naturellement faible. Par « naturellement », on entend même lorsque les électrodes 214 et 215 ne sont pas polarisées. Les zones 224, 225 ont, vis-à-vis du deuxième liquide 108, des mouillabilités différentes de celle du reste de la couche de matériau diélectrique 218. Dans un cas où le deuxième liquide 108 est de l'eau, le matériau diélectrique 218 peut être de nature hydrophobe. Les zones 224, 225, peuvent être quant à elles des zones de mouillabilité différente de celle du reste de la couche de matériau 218, formé (e) s par exemple par un traitement chimique localisé ou une insolation UV localisée de la couche de matériau diélectrique 218.

Selon une possibilité (non représentée) les zones 224, 225 peuvent avoir respectivement une forme en étoile. Une telle forme peut permettre d'améliorer le maintien des gouttes 203 et 204 en regard respectivement des électrodes 214 et 215.

Les potentiels respectifs auxquels sont mises les électrodes 214, 215, sont destinés à être modulés, pour permettre aux gouttes 203, 204, d'adopter des positions différentes, et à la membrane 130 d'adopter des profils différents. Sur la figure 4, une position pour laquelle les électrodes 214 et 215 sont polarisées par des potentiels respectifs égaux par exemple de l'ordre de 100V, est notamment représentée. Dans cet état de polarisation des électrodes 214 et 215, les gouttes 203 et 204 ont des profils ou des formes respectives notées 279 et 289, par exemple de demi-sphères, et exercent respectivement une pression sur la membrane 130. La membrane 130 épouse quant à elle au moins partiellement la forme des gouttes 203 et 204 et peut avoir une forme sinueuse autour ou par rapport à sa position de repos (indiquée par une ligne discontinue référencée 250 sur la figure 4) pour laquelle les électrodes 214 et 215 ne sont pas polarisées. Sur cette même figure 4, sont également représentés d'autres exemples de formes que les gouttes 203 et 204 sont susceptibles d'adopter (ces autres formes étant représentées pour la goutte 203 par des traits discontinus référencés 271, 272, 273, 274, 275, 276, 277, 278 et pour la goutte 204, par des traits discontinus référencés 281, 282, 283, 284, 285, 286, 287, 288), pour d'autres états de polarisations des électrodes 214 et 215. Pour au moins plusieurs de ces autres états de polarisation, la membrane 130 peut avoir une forme ou un profil différent de celui qu'elle a pour un état du dispositif dans lequel les électrodes 214 et 215 ne sont pas polarisées, (les formes de la membrane pour lesdits autres états de polarisation n'étant pas représentés sur la figure 4).

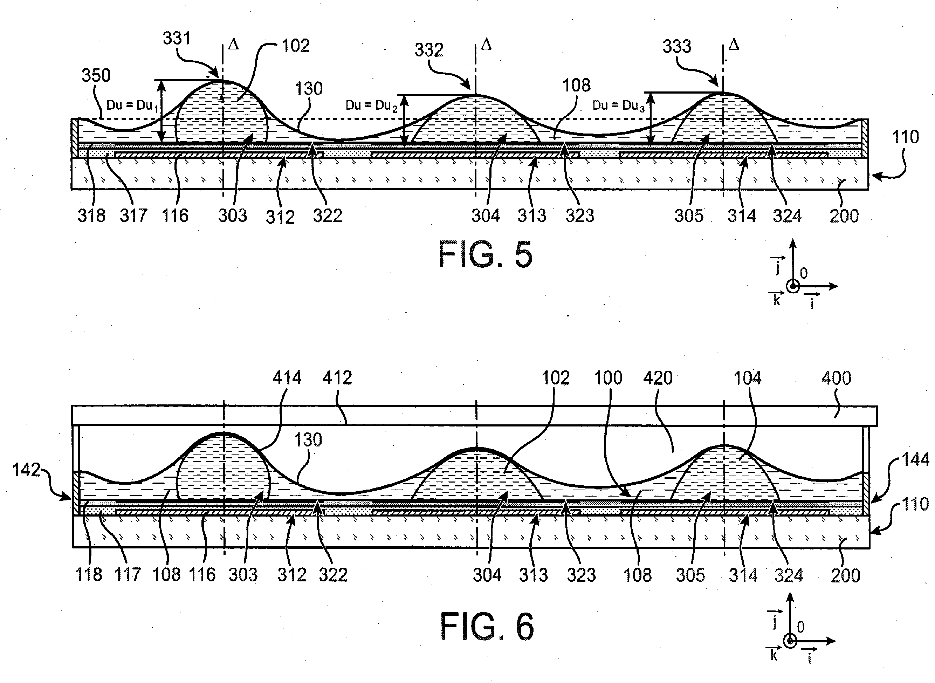

Un autre exemple de dispositif d'actionnement suivant l'invention, met en oeuvre des électrodes commandées indépendamment les unes des autres ou qui peuvent être mises à des potentiels respectifs différents les uns des autres par les moyens de commande de polarisation. Un tel exemple de dispositif, comprenant entre la membrane 130 et le support 110, des gouttes 303, 304, 305, du premier liquide 102, agencées en matrice et reposant respectivement sur des électrodes 312, 313, 314, agencées en matrice et commandées indépendamment les unes des autres, est illustré sur la figure 5. Les gouttes 303, 304, 305, reposent sur des zones 322, 323, 324, disjointes ou distinctes d'une couche de matériau diélectrique 318. Dans un cas où le liquide 102 est de l'huile et le deuxième liquide 108 de l'eau, la couche de matériau diélectrique 318 peut être formée à base d'un matériau diélectrique hydrophobe. Les zones 322, 323, 324, peuvent avoir une mouillabilité vis-à-vis du deuxième liquide 108 différente de celle du reste de la couche diélectrique 318. Pour cela les zones 322, 323, 324 peuvent être des zones de la couche de matériau diélectrique 318, ayant été traitées par exemple par voie chimique ou par une insolation UV. La couche diélectrique 318 repose sur une autre couche diélectrique 317, recouvrant les électrodes 312, 313, 314.

Ce dispositif se trouve dans un état de polarisation pour lequel les électrodes 312, 313, 314, sont mises respectivement à des potentiels U=U1, U'=U2, U''=U3 avec U1 ≠ U2 ≠ U3. De par les polarisations différentes des électrodes 312, 313, 314, les gouttes 303, 304, 305, ont des formes différentes, par exemple des surfaces externes respectives et/ou des surfaces de contact respectives et/ou des hauteurs en leur centre respectives différentes, et exercent des contraintes respectives différentes sur la membrane 130. Les gouttes 303, 304, 305, sont en contact à la fois avec le support 110 et la membrane 130 et maintiennent respectivement, une première zone 331 de la membrane 130 à une première distance DU=DU1 du support 110 dépendante du potentiel U, une deuxième zone 332 de la membrane 130 à une deuxième distance DU'=DU2 du support 110 dépendante du potentiel U', une troisième zone 333 de la membrane 130 à une troisième distance DU''=DU3 du support 110 dépendante du potentiel U'', avec DU1 ≠ DU2 ≠ DU3.

La mise en oeuvre d'une matrice de gouttes dont les déformations sont contrôlées par une matrice d'électrodes peut permettre d'appliquer des contraintes sur plusieurs régions de la membrane 130. Cela peut permettre de donner à la membrane 130 de nombreux profils différents. Cela peut également modifier localement le profil de la membrane 130.

Selon une variante (figure 6) du dispositif de la figure 5, ce dernier peut comprendre en outre une couche d'encapsulation ou un couvercle 400 de protection protégeant la membrane 130 souple de l'environnement extérieur. Le couvercle de protection 400 peut être situé en regard du support 110, et disposé de manière à maintenir l'enceinte 100 remplie des liquides 102 et 108, dans un espace clos 420. Cet espace clos 420 peut comprendre un gaz, par exemple un gaz inerte ou de l'air. Dans un cas notamment où le dispositif d'actionnement est intégré à un dispositif d'optique adaptative, le couvercle 400 peut être à base d'un matériau transparent tel qu'un matériau plastique ou du verre et reposer sur les parois 142, 144 auxquelles la membrane 130 est rattachée. Le dispositif peut également comprendre une ou plusieurs couches anti-reflets. Le couvercle 400 peut comporter, ou être accolé à, ou être recouvert d'une, première couche anti-reflet 412. La première couche anti-reflet 412 peut être située en regard ou en vis-à-vis de la membrane 130. La membrane 130 peut également comporter, ou être accolée à, ou être recouverte d'une deuxième couche anti-reflet 414 (figure 6). Le support 110 peut également comporter, ou être accolé à, ou être recouvert d'une troisième couche anti-reflet.

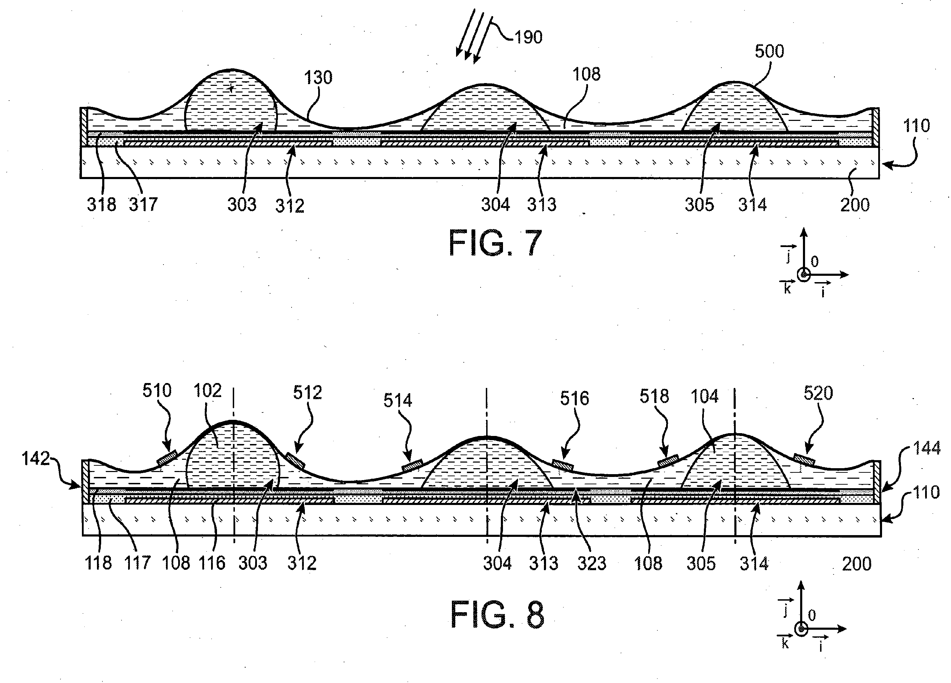

Selon une mise en oeuvre particulière, le dispositif d'actionnement peut être intégré ou appartenir à un dispositif optique ou d'optique adaptative, dont les propriétés peuvent être modulées par électromouillage, et qui est destiné à fonctionner en transmission de rayons lumineux 190. La membrane 130 peut comprendre, ou être accolée à, ou être recouverte par, au moins une couche réfléchissante 500 de rayons lumineux 190. Dans ce cas, la membrane 130 et la couche réfléchissante 500 forment un système optique fonctionnant en réflexion, et joue par exemple le rôle d'un ou plusieurs miroir(s) ou d'une matrice de miroirs dont la forme de la surface réfléchissante est susceptible d'être modulée par déformation de la membrane via électromouillage. La couche réfléchissante 500 peut être par exemple à base d'un métal tel que de l'or de l'aluminium ou de l'argent ou formée d'un empilement de sous-couches par exemple diélectriques (figure 7).

Selon une variante de mise en oeuvre du dispositif illustrée sur la figure 8, la membrane 130 peut être dotée d'une pluralité d'électrodes 510, 512, 514, 516, 518, 520 en regard respectivement d'électrodes 312, 313, 314, du support 110. Dans le cas où le dispositif optique est destiné à fonctionner en transmission, les électrodes peuvent être formées par exemple à base d'un matériau transparent tel que de l'ITO et peuvent être recouvertes d'un matériau isolant. Dans un tel dispositif, le profil de la membrane 130, peut être modulé par un effet combiné, d'une part de(s) déformation(s) des gouttes 303, 304, 305, du premier liquide 102, induite(s) par des variations de polarisation des électrodes 312, 313, 314, du support 110, et d'autre part, par une interaction ou une attraction entre les électrodes 312, 313, 314, polarisées et les électrodes 510, 512, 514, 516, 518, 520, situées sur la membrane 130.

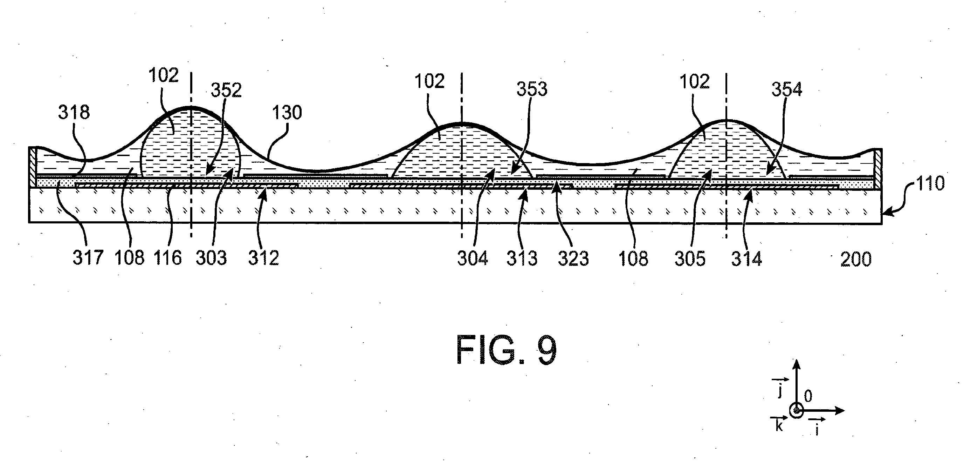

Une variante du dispositif décrit précédemment en liaison avec la figure 5, est illustrée sur la figure 9. Les gouttes 303, 304, 305, du premier liquide 102, par exemple de l'huile, sont agencées en matrice en regard d'électrodes 312, 313, 314, et placées dans des ouvertures 352, 353, 354, d'une couche de matériau diélectrique 318 hydrophobe ajourée. La couche diélectrique hydrophobe 318 ajourée et les gouttes 303, 304, 305, reposent sur une autre couche diélectrique 317 recouvrant les électrodes 312, 313, 314. Vis-à-vis du deuxième liquide 108, par exemple de l'eau, la mouillabilité de la couche diélectrique 318 et la mouillabilité de l'autre couche diélectrique 317 sont différentes.

Le dispositif suivant l'invention, n'est pas limité à un premier liquide non-conducteur ou faiblement conducteur et à un deuxième liquide conducteur. Selon une variante du dispositif d'actionnement, le déplacement de la membrane peut être effectué à l'aide d'un volume liquide comportant des gouttes d'un premier liquide conducteur, et un deuxième liquide non-conducteur. Selon cette variante, les gouttes de premier liquide peuvent être par exemple des gouttes d'eau, par exemple de l'eau courante ou une eau chargée en ions, tandis que le deuxième liquide peut être par exemple de l'huile ou un liquide isolant et non miscible à l'eau.

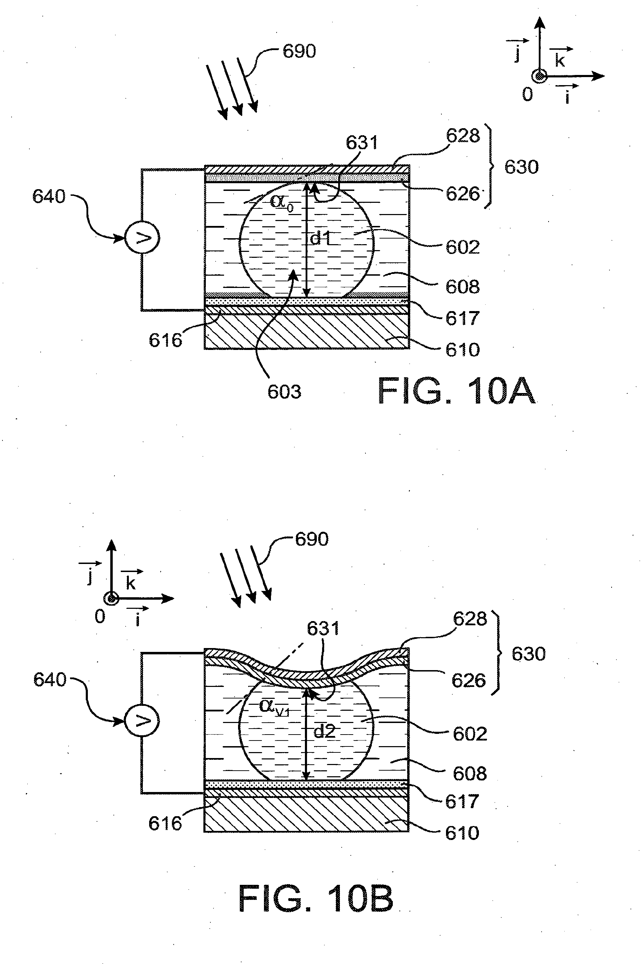

Un autre exemple de dispositif d'optique adaptative comprenant un dispositif d'actionnement à membrane flexible et déformable par électromouillage, est illustré sur les figures 10A et 10B. Ce dispositif optique met également en oeuvre une commande de la courbure d'une fine membrane par l'action d'une goutte dont la mouillabilité ou la forme est elle-même commandée à l'aide du phénomène d'électromouillage. Le dispositif d'actionnement comprend un support conducteur 610, une membrane 630 flexible rattachée au support conducteur 610 (les moyens pour rattacher le support et la membrane 630 n'étant pas représentés), formant avec le support 610 une enceinte fermée de volume V. L'enceinte fermée est remplie d'un premier liquide 602, par exemple de l'eau sous forme d'une goutte et d'un deuxième liquide 608, par exemple une huile. Le premier liquide 602 et le deuxième liquide 608 sont de préférence non miscibles. La goutte 603 peut reposer sur une première couche diélectrique 617 du support 610. La première couche diélectrique 617 peut reposer quant à elle sur une première couche conductrice 616 formant une première électrode.

Des moyens électriques sont mis en oeuvre, pour moduler le profil de la membrane 630, par contrôle de la forme de la goutte 603. La membrane 630 est formée d'une deuxième couche conductrice 628 apte à jouer le rôle d'une contre-électrode, accolée à une deuxième couche de matériau diélectrique 626. La deuxième couche de matériau diélectrique 626 est en contact avec la goutte 603. Dans cet exemple, la mouillabilité de la deuxième couche diélectrique 626 vis-à-vis du premier liquide 602 est naturellement faible. Dans un cas par exemple où le premier liquide 602 est de l'eau, la deuxième couche diélectrique 626 peut être par exemple une couche hydrophobe. La membrane 630 a une épaisseur faible par exemple comprise entre 10 nanomètres et 1 micromètre, suffisamment pour être déformée par des forces capillaires qui s'exercent au niveau de la ligne triple à l'interface entre le premier liquide 602, le deuxième liquide 608 et la première couche diélectrique 617. La première couche conductrice 616 du support 610 et la deuxième couche conductrice 628 de la membrane 630 sont connectés à une alimentation 640, apte à appliquer une tension V entre la première couche conductrice 616 du support 610 et la deuxième couche conductrice 628.

Le dispositif est susceptible d'adopter au moins une première position « de repos » (figure 10A) dans laquelle la goutte de liquide 602 et la membrane 630 ont des formes respectives données. Cette position de repos peut être adoptée pour une tension V telle que V=V1=0 volts entre la couche conductrice 616 et la deuxième couche conductrice 628. Dans la position de repos, la goutte de liquide 60.2 peut avoir une surface de contact très faible avec la deuxième couche diélectrique 626 hydrophobe et forme un angle de contact ***α***ᵥ = ***α***₀ très grand par exemple compris entre 60° et 110°. Dans cette position, la membrane 630 ne subit pas de contrainte capillaire de la part de la goutte de liquide 602 ou une contrainte trop faible pour être déformée. Dans la position de repos, la membrane 630 peut être parallèle à un plan principal du support 610. Dans la position de repos, une région 631 de la membrane 630 en contact avec la goutte 630 se trouve à une première distance d₁ du support 610.

En faisant varier la tension V, on peut moduler la mouillabilité de la couche diélectrique 626 vis-à-vis du premier liquide 603.

Lorsque l'on applique une tension V par exemple telle que V > 0 entre la première couche conductrice 616 du support 610 et la deuxième couche conductrice 628 de la membrane, la goutte 603 a tendance à se déformer de sorte que la surface de contact entre la goutte 603 de liquide 602 augmente sous l'effet de l'électromouillage. L'angle de contact ***α***ᵥ passe à une valeur ***α***ᵥ inférieure à ***α***₀*.* La déformation de la goutte 603 de liquide 602 entraîne une contrainte mécanique sur la membrane 630. Une portion de la membrane a tendance à se déplacer et à se rapprocher du support 610.

Le dispositif est susceptible d'adopter au moins une deuxième position (figure 10B) lorsqu'une tension V = V2 (avec V2 > 0) est appliquée entre la deuxième couche conductrice 628 et la première couche conductrice 616. Dans cette deuxième position, la membrane 630 comporte un profil courbe. Dans la deuxième position, la région 631 de la membrane 630 en contact avec la goutte 630, se trouve a une deuxième distance d2 du support 610, telle que d2 < d1. Entre la première position ou position de repos et la deuxième position, la membrane 630 s'est rapprochée du support 610.

Dans un cas, par exemple, où la membrane 630 est recouverte d'une ou plusieurs couches réfléchissantes de rayons lumineux ou comprend une ou plusieurs couches réfléchissantes de rayons lumineux, un tel dispositif d'optique adaptative est destiné à fonctionner en réflexion de rayons lumineux.

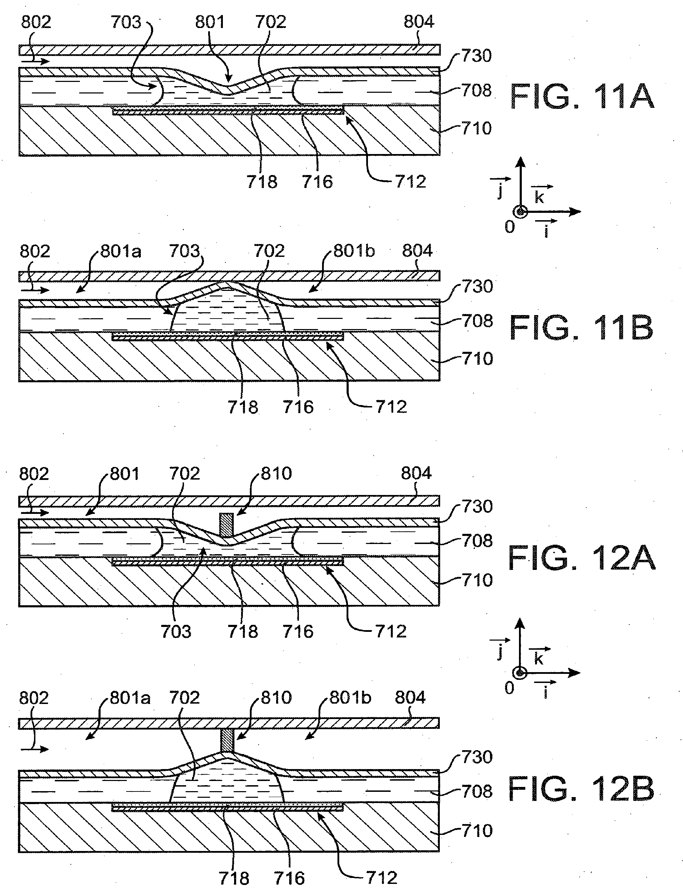

Un dispositif de vanne ou formant une vanne, comprenant un dispositif d'actionnement suivant l'invention, à membrane flexible et déformable par électromouillage, est illustré sur les figures 11A et 11B. Ce dispositif comprend notamment un support 710, une membrane 730 flexible rattachée au support 710 (les moyens pour rattacher le support et la membrane n'étant pas représentés). La membrane 730 forme avec le support 710 une enceinte fermée de volume V remplie d'un premier liquide 702 sous forme d'une goutte 703 et d'un fluide, par exemple un deuxième liquide 708, le premier liquide et le deuxième liquide étant non miscibles. Des moyens électriques sont mis en oeuvre, pour moduler le profil de la membrane 730, par contrôle de la forme de la goutte 703. Dans cet exemple, la goutte 703 est placée en regard d'au moins une électrode 712 intégrée au support 710. L'électrode 712 peut être formée d'une couche conductrice 716 et recouverte d'au moins une couche diélectrique 718 avec laquelle la goutte 703 peut être en contact. Le dispositif peut également comprendre au moins une contre-électrode, par exemple intégrée au support ou à la membrane. La membrane 730 est, dans cet exemple, située entre le support 710 et une zone 804, par exemple une couche rigide, rattachée au support 710 (les moyens pour rattacher le support et la couche rigide n'étant pas représentés). La zone 804 rigide peut être espacée de la membrane 730 d'une distance e par exemple comprise entre 0,5 micromètre et 100 micromètres. La zone 804 et la membrane 730 espacés l'un de l'autre forment un canal 801, à travers lequel un fluide 802 peut être destiné à circuler ou par lequel un fluide 802 peut être destiné à passer. La goutte 703 de liquide dont on fait varier l'angle de contact par électromouillage permet d'actionner ou de déplacer la membrane 730. Par électromouillage, suivant la manière dont l'électrode 712 est polarisée, le dispositif est susceptible d'adopter plusieurs positions. Pour un premier potentiel appliqué sur l'électrode 712, le dispositif est susceptible d'adopter au moins une première position (figure 11A) dans laquelle la membrane 730 et la couche 804 ne sont pas en contact. Dans cette première position, le canal 801 est ouvert. Dans la première position, le fluide 802 est susceptible de passer à travers le canal 801.

Pour un deuxième potentiel appliqué sur l'électrode 712 différent du premier potentiel, le dispositif est susceptible d'adopter au moins une deuxième position (figure 11B) dans laquelle la membrane 730 a un profil différent de la première position et dans laquelle la zone 804 et la membrane 730 sont en contact. Dans la deuxième position, le canal 801 est fermé et comporte deux parties 801a et 801b séparées. Dans cette deuxième position ou de canal 801 fermé, on empêche la circulation d'un fluide 802 à travers le canal 801 et l'on maintient le fluide 802 dans l'une des deux parties 801a et 801b.

Une variante de l'exemple de dispositif décrit précédemment en liaison avec les figures 11A et 11B, est illustrée sur les figures 12A et 12B. Pour cette variante, un élément rigide 810 est rattaché à la membrane 730 et situé entre la membrane 730 et la couche 804. Cet élément 810 forme une paroi réalisant un angle non-nul avec la membrane 730 et avec la couche 804, par exemple un angle de 90° avec la couche 804. Le dispositif est susceptible d'adopter au moins une première position (figure 12A) ou de canal 801 ouvert pour laquelle ni l'élément 810 ni la membrane 730 ne sont en contact avec la zone ou couche 804. Dans cette première position, le canal 801 est ouvert. Dans la première position, le fluide 802 est susceptible de passer à travers le canal 801. La membrane 730 est également susceptible d'adopter au moins une deuxième position (figure 12B) pour laquelle l'élément 710 et la zone 804 sont en contact. Dans cette deuxième position, le canal 801 est fermé. Dans cette deuxième position, on empêche la circulation du fluide 802 à travers le canal 801, et l'on maintient le fluide 802 dans l'une des deux parties 801a et 801b du canal 801.

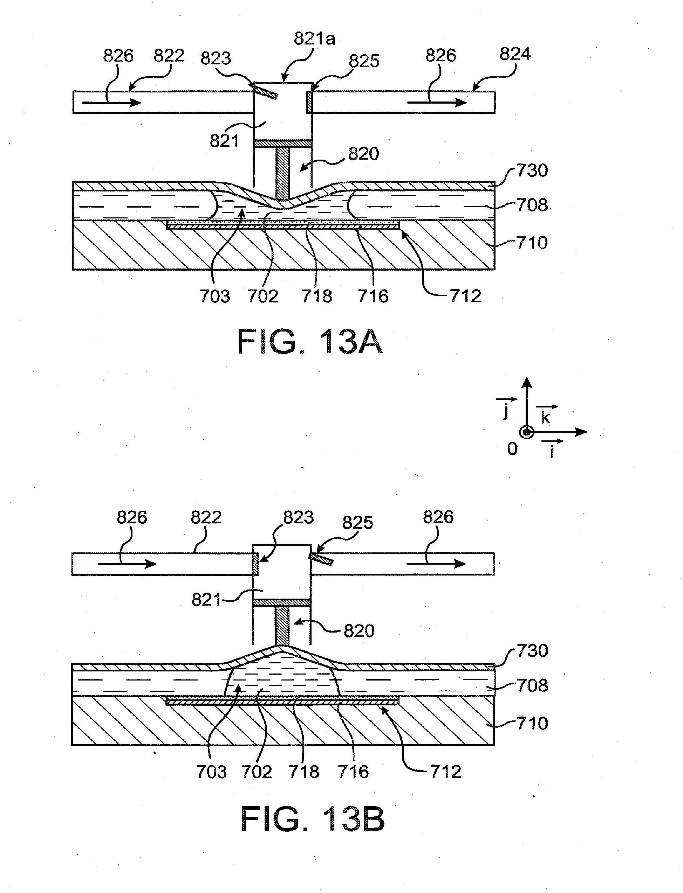

Un dispositif de pompe ou formant une pompe, comprenant un dispositif d'actionnement suivant l'invention, à membrane flexible et déformable par électromouillage, est illustré sur les figures 13A et 13B. Le dispositif d'actionnement comprend un support 710, une membrane 730 flexible rattachée au support 710 (les moyens pour rattacher le support et la membrane n'étant pas représentés). La membrane 730 forme avec le support 710 une enceinte fermée de volume V remplie d'un premier liquide 702 sous forme d'au moins une goutte 703 et d'un fluide, par exemple un deuxième liquide 708, le premier liquide et le deuxième liquide étant non miscibles. La goutte 703 de liquide dont la forme peut être modifiée par électromouillage, peut permettre d'actionner ou de déplacer la membrane 730. Des moyens électriques sont mis en oeuvre, pour moduler le profil de la membrane 730, par contrôle de la forme de la goutte 703. La goutte 703 est placée en regard d'une électrode 712 intégrée au support 710. L'électrode 712 est formée d'une couche conductrice 716 et peut être recouverte d'au moins une couche diélectrique 718. La goutte 703 peut être en contact avec la membrane 730 et la couche diélectrique 718. Le dispositif d'actionnement peut également comprendre au moins une contre-électrode, par exemple intégrée au support ou à la membrane. Le dispositif d'actionnement est susceptible d'adopter plusieurs positions, suivant la manière dont l'électrode 712 est polarisée. Dans cet exemple, un élément formant piston 820 est rattaché à la membrane 730. Ce piston 820, solidaire de la membrane 730, est susceptible de se déplacer dans le corps d'une chambre de travail 821, et de glisser le long de parois de cette chambre 821. Le piston 820 peut être destiné par exemple à se déplacer dans une direction réalisant un angle non-nul, par exemple de 90° avec un plan principal du support 710. Le piston 820 se déplace notamment par rapport au fond noté 821a de la chambre de travail 821.

La chambre de travail 821 comporte un premier clapet 823 et un deuxième clapet 825, en regard l'un de l'autre, et situés au niveau desdites parois. Un premier conduit 822, est rattaché à la chambre 821 est séparé de cette dernière par l'intermédiaire du premier clapet 823. Un deuxième conduit 824, est rattaché à la chambre 821 et séparé de cette dernière par l'intermédiaire du deuxième clapet 825. Un fluide 826, par exemple un liquide, est destiné à traverser le premier conduit 822, puis à être aspiré dans la chambre, puis à être injecté dans le deuxième conduit 824. Le premier conduit 822 et le deuxième conduit 824 peuvent être par exemple parallèles à un plan principal du support 710.

La figure 13A illustre une première position du dispositif dans laquelle les liquides 702 et 708 induisent une première contrainte sur la membrane 730, laquelle maintient le piston 820 a une première distance du fond 821a de la chambre 821. Dans cette première position, le premier clapet 823 est ouvert et le deuxième clapet 825 est fermé. Un fluide 826 circulant dans le premier conduit 822 est aspiré vers la chambre 821.

La figure 13B illustre une deuxième position du dispositif dans laquelle la goutte 703 induit une deuxième contrainte sur la membrane 730, laquelle maintient le piston 820 à une deuxième distance du fond 821a de la chambre 821. Dans cette deuxième position, le premier clapet 823 est fermé, tandis que le deuxième clapet 825 est ouvert. Le fluide 826 est injecté dans le deuxième conduit 824.

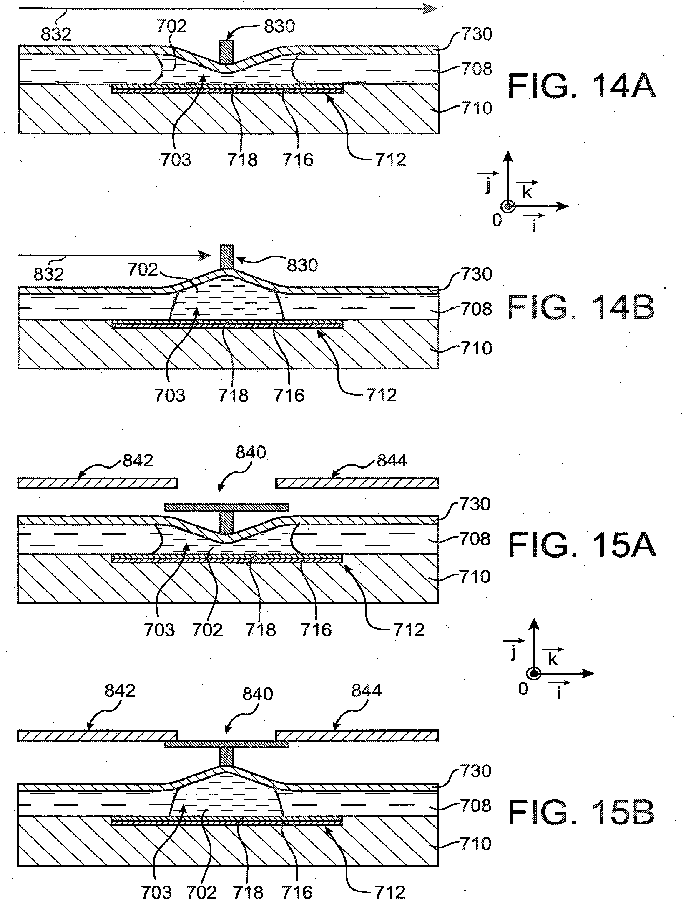

Un dispositif interrupteur optique comprenant un dispositif d'actionnement suivant l'invention, à membrane flexible et déformable par électromouillage, est illustré sur les figures 14A et 14B. Le dispositif d'actionnement comprend dans cet exemple un support 710, une membrane 730 flexible rattachée au support 710 (les moyens pour rattacher le support et la membrane n'étant pas représentés). La membrane 730 forme avec le support 710 une enceinte fermée de volume V remplie d'un premier liquide 702 sous forme d'au moins une goutte 703 et d'un deuxième fluide, par exemple un deuxième liquide 708, le premier liquide et le deuxième liquide étant non miscibles. La goutte 703 est placée en regard d'une électrode 712 qui peut être intégrée au support 710. L'électrode 712 peut être formée d'une couche conductrice 716 et peut être recouverte d'au moins une couche diélectrique 718 avec laquelle la goutte 703 peut être en contact. La goutte 703 de liquide dont la forme peut être modifiée par électromouillage, peut permettre d'actionner ou de déplacer la membrane 730. Le dispositif d'actionnement est susceptible d'adopter plusieurs positions, suivant la manière dont l'électrode 712 est polarisée. Le support 710 et la membrane 730 sont disposés à proximité d'un faisceau de rayons lumineux 832. Le faisceau de rayons lumineux 832 peut être tel qu'il se propage à proximité de la membrane 730, le long de la membrane 730 dans une direction parallèle au plan principal du support 710.

Un élément 830 est rattaché à la membrane 730. Cet élément 830 forme une paroi réalisant un angle non-nul avec la membrane 730. Selon une première possibilité l'élément 830 peut être recouvert d'un matériau absorbant de rayons lumineux. Selon une deuxième possibilité l'élément 830 peut être recouvert d'un matériau apte à réfléchir des rayons lumineux. Le dispositif d'actionnement est susceptible d'adopter au moins une première position (figure 14A), dans laquelle l'élément 830 ne rencontre pas le trajet du faisceau lumineux 832. Dans cette première position le dispositif joue le rôle d'un interrupteur optique « passant ». Le dispositif est susceptible d'adopter au moins une deuxième position (figure 14B) dans laquelle l'élément 830 rencontre le trajet du faisceau lumineux 832 ou intercepte le faisceau lumineux 832. Dans un cas où l'élément 830 comporte un revêtement réfléchissant, cet élément 830 peut permettre de réfléchir le faisceau lumineux 832. Dans le cas où l'élément 830 comporte un revêtement absorbant de rayons lumineux, l'élément 830 peut permettre de stopper le trajet, et d'absorber le faisceau lumineux 832.

Un dispositif interrupteur électrique comprenant un dispositif d'actionnement suivant l'invention, à membrane flexible et déformable par électromouillage, est illustré sur les figures 15A et 15B. Le dispositif d'actionnement comprend dans cet exemple un support 710, une membrane 730 flexible rattachée au support 710 (les moyens pour rattacher le support et la membrane n'étant pas représentés). La membrane 730 forme avec le support 710 une enceinte fermée de volume V remplie d'un premier liquide 702 sous forme d'au moins une goutte 703 et d'un deuxième fluide, par exemple un deuxième liquide 708, le premier liquide 702 et le deuxième liquide 708 étant non miscibles. La goutte 703 est placée en regard d'une électrode 712 intégrée au support 710. L'électrode 712 est formée d'une couche conductrice par exemple à base d'un métal tel que de l'or, ou de l'aluminium et peut être recouverte d'une couche diélectrique 718. La goutte 703 peut être en contact avec la membrane 730 et la couche diélectrique 718. La goutte 703 de liquide dont on modifie la forme par électromouillage peut permettre d'actionner ou de déplacer la membrane 730. Le dispositif d'actionnement est susceptible d'adopter plusieurs positions, suivant la manière dont l'électrode 712 est polarisée. Dans cet exemple, un élément 840 est rattaché à la membrane 730. Cet élément 840 est conducteur de l'électricité et forme un contacteur. Au moins une première zone conductrice 842 et au moins une deuxième zone conductrice 844 aptes à acheminer un courant électrique, sont disposées au dessus de la membrane 730 et du contacteur 840. Le dispositif d'actionnement est susceptible d'adopter au moins une première position (figure 15A), dans laquelle le contacteur 840 d'une part et les zones conductrices 842 et 844 d'autre part ne sont pas en contact. Dans cette première position, les zones conductrices 842 et 844 ne sont pas reliées électriquement. Dans la première position, le dispositif joue le rôle d'un interrupteur « ouvert ». Un courant traversant une des deux zones conductrices ne peut pas accéder à l'autre de ces deux zones 842 et 844. Le dispositif d'actionnement est susceptible d'adopter au moins une deuxième position (figure 15B), dans laquelle le contacteur 840 d'une part et les zones conductrices 842 et 844 d'autre part sont en contact. Dans cette deuxième position, les zones conductrices 842 et 844 sont reliées électriquement par l'intermédiaire du contacteur 840. Dans la deuxième position le dispositif joue le rôle d'un interrupteur « fermé ». Un courant traversant une des deux zones conductrices 842 et 844 peut accéder à l'autre de ces deux zones 842 et 844.

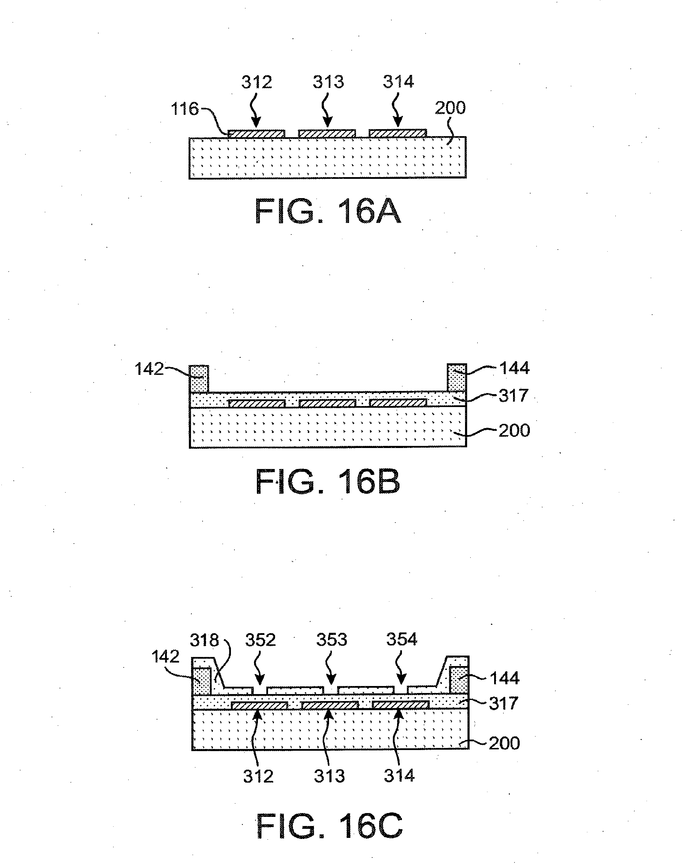

Un procédé de réalisation d'un exemple de dispositif d'actionnement suivant l'invention du type de celui présenté en liaison avec la figure 9, va à présent être décrit en liaison avec les figures 16A-16G.

Le matériau de départ peut être par exemple un substrat 200 par exemple à base de verre ou à base d'un matériau plastique, sur lequel on dépose une couche conductrice 116 par exemple à base d'ITO. Dans cette couche conductrice 116, on réalise des motifs par exemple à l'aide d'au moins une étape de photolithographie afin de définir une matrice d'électrodes 312, 313, 314 et des lignes de connexions pour ces électrodes (figure 16A). On dépose ensuite une première couche de matériau diélectrique 317, tel qu'une couche d'oxyde de silicium ou de Si₃N₄ de manière à recouvrir les électrodes 312, 313, 314.

On dépose ensuite une couche de résine photosensible d'épaisseur comprise par exemple entre 10 µm et 100 µm, dans laquelle on forme des motifs par photolithographie pour réaliser des plots 142 et 144 aux extrémités du support (figure 16B). Puis on dépose une deuxième couche diélectrique 318, par exemple de nature hydrophobe.

Selon une première possibilité, on réalise une pluralité d'ouvertures 352, 353, 354, dans cette deuxième couche diélectrique 318, en regard des électrodes 312, 313, 314 et de manière à dévoiler la première couche diélectrique 317. Les ouvertures 352, 353, 354 pourront servir d'emplacements, respectivement pour les gouttes 303, 304, 305 (figure 16C).

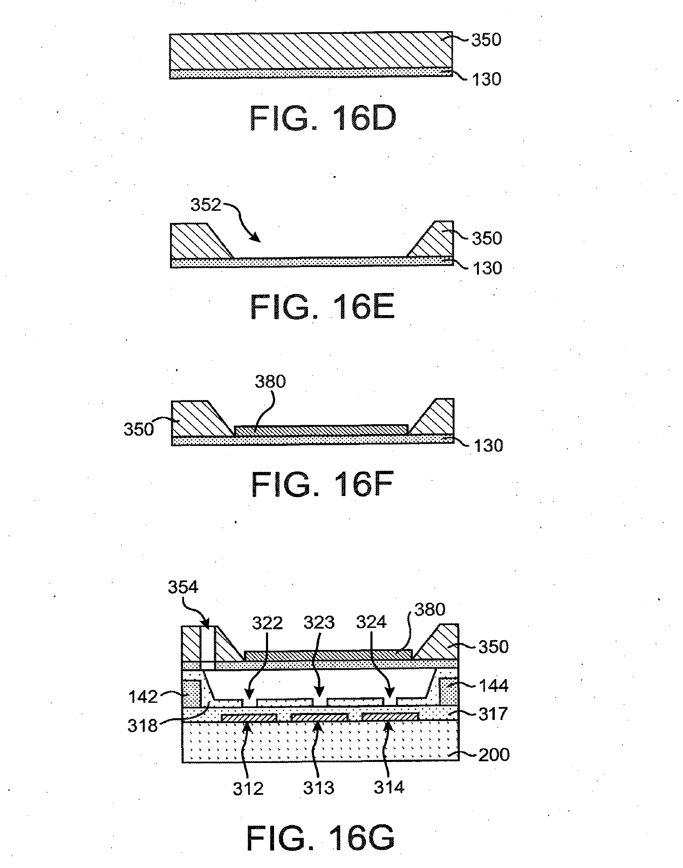

En face arrière d'un deuxième substrat 350 par exemple à base de silicium, on dépose une fine couche, d'épaisseur comprise entre 10 nanomètres et 10 micromètres destinée à servir de membrane 130. La fine couche 130 peut être par exemple à base de Si₃N₄ (figure 16D). On réalise ensuite une large ouverture 352 au centre du deuxième substrat 350 par une gravure en face avant, par exemple par une gravure chimique à base de KOH ou une gravure plasma, de manière à dévoiler une surface importante de la couche 130 (figure 16E).

Un traitement hydrophobe par exemple en fluoropolymère amorphe peut être éventuellement réalisé sur une face de la couche 130, dite face « inférieure », qui n'est pas en contact avec le substrat 350.

Sur l'autre face de la couche 130, dite face « supérieure », on peut éventuellement former par dépôt puis gravure d'une couche métallique 380, une contre- électrode accolée à la membrane 130 ou intégrée à la membrane 130 (figure 16F).

Ensuite, on assemble le deuxième substrat 350 sur les plots 142 et 144 du substrat 200, par exemple par collage, et de sorte que la membrane 130 est placée en regard des zones 322, 323, 324. On peut ensuite effectuer, à proximité des plots 142 et 144, au moins un trou 354 à travers le deuxième substrat 350 et la membrane 130. Ce trou 354 pourra servir de trou d'injection pour remplir le composant ainsi formé d'un premier liquide 102 et d'un deuxième liquide 108 (figure 16G).

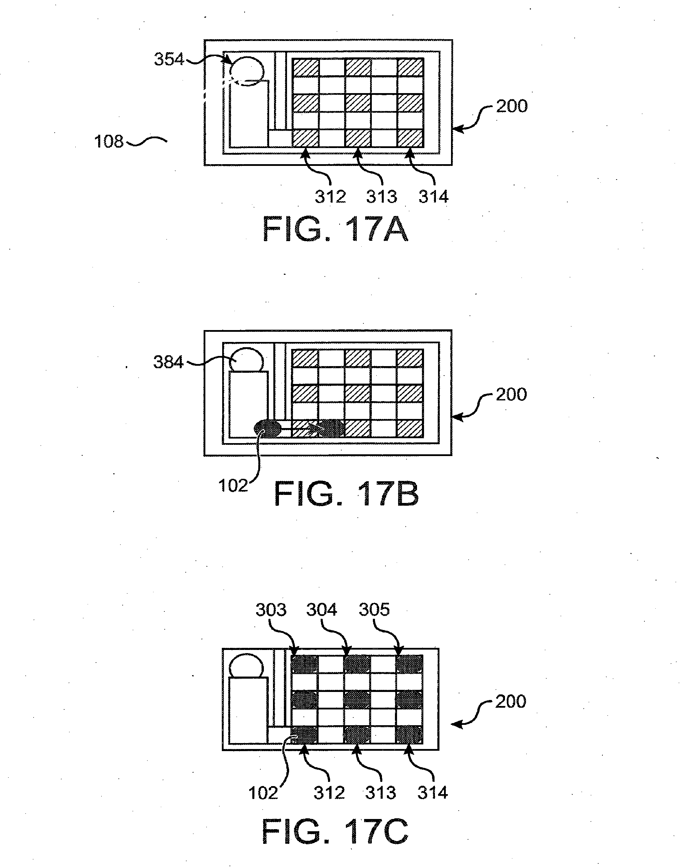

Un exemple de procédé de remplissage du composant va à présent être décrit. On peut, pour effectuer ce remplissage connecter électriquement les électrodes 312, 313, 314, à des moyens de polarisation. On rempli ensuite le composant avec le deuxième liquide 108. Ce remplissage peut être effectué par une injection à travers le trou 354 d'injection par pression ou par remplissage sous vide (figure 17A, le composant étant représenté en vue de dessus, l'injection du deuxième liquide étant schématisée par une flèche 108). Puis on remplit le composant du premier liquide 102 par le trou 354. A partir du premier liquide 102, on forme ensuite des gouttes 303, 304, 305, en regard des électrodes 312, 313, 314. Pour cela, on peut appliquer des potentiels sur les électrodes 312, 313, 314. Par électromouillage, on sépare le volume liquide 102 en gouttes 303, 304, 305, comme cela est décrit par exemple dans le document : "Toward Digital Microfluidic Circuits : Creating, Transporting, Cutting and Merging Liquid Droplets by Electrowetting-Based Actuation", S. K. Cho, S.-K. Fan, i-1. Moon, and C.-J Kim, IEEE Conf. MEMS, Las Vegas, NV, Jan. 2002, pp. 32-52. Ces gouttes 303, 304, 305 sont déplacées jusqu'à leurs électrodes 312, 313, 314 respectives par électromouillage. Une fois le composant rempli, le trou d'injection 354 peut être bouché. Cette opération peut s'effectuer par collage ou pressage d'un bouchon étanche. Pendant ces opérations de remplissage la membrane 130 déformable peut être éventuellement rigidifiée. Pour cela on peut utiliser une résine ou une colle que l'on dépose sur la surface du composant. Après remplissage on supprime cette couche de résine. On peut aussi rigidifier la membrane par collage d'une plaque rigide avant remplissage. Cette plaque peut être alors décollée ou gravée après remplissage et bouchage du trou 354.

Un remplissage, sans effectuer une polarisation des électrodes 312, 313, 314, peut également être réalisé. Dans un cas où les zones ou plots 322, 323, 324, présentent une mouillabilité naturelle importante vis-à-vis du premier liquide 102, tandis que la couche 317 présente une faible mouillabilité vis-à-vis du premier liquide 102. Lorsque le premier liquide 102 est injecté dans le trou 354, des gouttes 303, 304, 305 se forment automatiquement sur les plots 322, 323, 324.

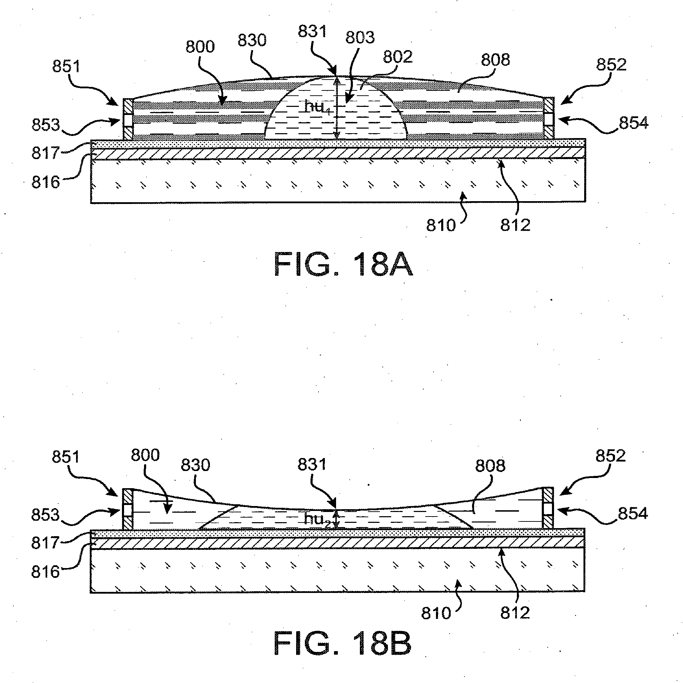

Les figures 18A et 18B illustrent une variante de dispositif d'actionnement suivant l'invention, à membrane flexible et déformable par électromouillage. Ce dispositif comprend notamment un support 810, une membrane 830 flexible rattachée et maintenue à distance du support 810 par l'intermédiaire de plots 851, 852. La membrane 830 forme avec le support 710 et les plots 851, 852 une enceinte 800 de volume V remplie d'un premier liquide 802 sous forme d'une goutte 803 et d'un deuxième fluide, par exemple un deuxième liquide 808 de volume V2, le premier liquide 802 et le deuxième liquide 808 étant non miscibles. Les plots comportent des ouvertures 853, 854 débouchant sur des réservoirs (non représentés). Dans cet exemple, l'enceinte 800 n'est pas fermée.

Des moyens électriques sont mis en oeuvre, pour moduler le profil de la membrane 830, par contrôle de la forme de la goutte 803. La goutte 803 est placée en regard d'une électrode 812 intégrée au support 810. L'électrode 812 peut être formée d'une couche conductrice 816 et recouverte d'au moins une couche diélectrique 817 avec laquelle la goutte 803 peut être en contact. La goutte 803 de liquide dont on fait varier la forme par électromouillage permet d'actionner ou de déplacer la membrane 830. Par électromouillage, suivant la manière dont l'électrode 812 est polarisée, la membrane 830 est susceptible d'adopter plusieurs positions. Dans cet exemple, où l'enceinte 800 est ouverte, le passage d'une position à une autre position de la membrane 830, peut être éventuellement réalisé à volume de deuxième liquide 808 variable.

Pour un premier potentiel appliqué sur l'électrode 812, le dispositif est susceptible d'adopter au moins une première position (figure 18A) dans laquelle la membrane 830 a un premier profil courbe. Dans cette première position la goutte 803 exerce une pression sur la membrane et maintient une zone 831 de la membrane 830 à une hauteur hu1 de la couche isolante 817 supérieure à la hauteur des plots 851, 852.

Pour un deuxième potentiel différent du premier potentiel appliqué sur l'électrode 812, par exemple inférieur au premier potentiel, le dispositif est susceptible d'adopter au moins une deuxième position (figure 18B) dans laquelle la membrane 830 a un deuxième profil courbe, opposé au première profil dans de la première position. Dans cette première position la goutte 803 exerce une pression sur la membrane et maintient une zone 831 de la membrane 830 à une hauteur hu2 de la couche isolante 817 inférieure à la hauteur des plots 851, 852.

Un passage de la deuxième position à la première position peut entraîner un passage, à travers les ouvertures 853, 854, d'une partie du volume V2 du deuxième liquide 808, depuis l'enceinte 100 vers les réservoirs (non représentés).

Un passage de la première position à la deuxième position peut entraîner un passage, à travers les ouvertures 853, 854, d'une partie du volume V2 du deuxième liquide 808, depuis les réservoirs vers l'enceinte 100 (non représentés).

L'invention n'est pas limitée à une enceinte remplie de deux liquides. Selon une variante, l'invention met également en oeuvre un dispositif d'actionnement comprenant un support, au moins une membrane flexible rattachée au support, formant avec le support au moins une enceinte remplie d'au moins un premier liquide, par exemple conducteur tel quel de l'eau, sous forme d'une ou plusieurs gouttes et d'au moins un deuxième fluide, par exemple un gaz tel que de l'air ou de l'azote, et des moyens électriques, comprenant une ou plusieurs électrodes, pour moduler le profil de la membrane, par contrôle de la forme d'au moins une desdites gouttes.

## Revendications

1. Dispositif d'actionnement de membrane flexible comprenant :
- un support (110),
- au moins une membrane (130) flexible rattachée au support, formant avec le support au moins une enceinte de volume (V) remplie d'au moins un premier liquide (102) sous forme d'une ou plusieurs gouttes (103, 203, 204, 303, 304, 305) et d'au moins un deuxième liquide (108) de volume (V2), le premier liquide et le deuxième liquide étant non miscibles, le dispositif étant susceptible d'adopter plusieurs positions dont au moins une position dite « de repos » dans laquelle lesdites une ou plusieurs gouttes ont des formes respectives données et la membrane a un profil donné, le dispositif comprenant en outre : des moyens électriques de contrôle par électromouillage de la forme desdites une ou plusieurs gouttes comprenant une ou plusieurs électrodes (112, 214, 215, 312, 313, 314), le dispositif étant adapté pour qu'une modification de la forme desdites une ou plusieurs gouttes, par le biais des moyens électriques de contrôle et pour que la ou les gouttes entrent en contact avec la membrane et exercent une pression sur la membrane, entraine une modification du profil de la membrane flexible soumise à cette pression.

2. Dispositif suivant la revendication 1, la modulation du profil de la membrane (130) étant réalisée à volume (V) de premier liquide et de deuxième liquide constant dans l'enceinte.

3. Dispositif suivant la revendication 1, la modulation du profil de la membrane (130) étant réalisée à volume de deuxième liquide variable dans l'enceinte.

4. Dispositif suivant l'une des revendications 1 à 3, dans lequel dans la position de repos, la membrane (130) est parallèle à un plan principal du support (110).

5. Dispositif suivant l'une des revendications 1 à 4, susceptible d'adopter au moins une position dans laquelle la membrane (130) comporte un profil courbe.

6. Dispositif suivant l'une des revendications 1 à 5, susceptible d'adopter au moins une position dans laquelle au moins une goutte (203) est en contact à la fois avec le support (110) et avec la membrane (130) et maintient une zone de la membrane à une distance (Du) donnée du support, le dispositif étant susceptible en outre d'adopter au moins une autre position dans laquelle ladite goutte est en contact à la fois avec le support et avec la membrane, et maintient ladite zone de la membrane à une autre distance du support différente de ladite distance donnée.

7. Dispositif suivant l'une des revendications 1 à 6, susceptible d'adopter une position différente de la position de repos dans laquelle le profil de la membrane (130) est différent dudit profil donné et dans laquelle au moins une première goutte (303) est en contact à la fois avec le support (110) et la membrane (130) et maintient une première zone (331) de la membrane (130) à une première distance (Du1) du support, au moins une autre goutte (304) est en contact à la fois avec le support (110) et la membrane (130) et maintient une deuxième zone (332) de la membrane (130) à une deuxième distance (Du2) du support, différente de la première distance.

8. Dispositif suivant l'une des revendications 1 à 7, susceptible d'adopter au moins une position différente de la position de repos dans laquelle la membrane comporte un profil sinueux.

9. Dispositif suivant l'une des revendications 1 à 8, dans lequel dans la position de repos, une goutte (103) est située en regard d'une zone (131) de la membrane (130) à une distance du support (110) dite « distance de repos » (D0) sans être en contact avec la membrane (130), le dispositif étant susceptible d'adopter au moins une autre position dans laquelle ladite goutte (103) est en contact à la fois avec le support et la membrane, et maintient ladite zone (131) de la membrane à une distance (Du1) du support différente de ladite distance (D0) de repos.

10. Dispositif suivant l'une des revendications 1 à 9, dans lequel, dans la position de repos au moins une goutte du premier liquide est en contact avec le support et avec la membrane.

11. Dispositif suivant l'une des revendications 1 à 10, dans lequel dans la position de repos, les gouttes (103) du premier liquide sont en contact avec le support (110) et ne sont pas en contact avec la membrane (130).

12. Dispositif suivant l'une des revendications 1 à 11, une ou plusieurs desdites électrodes (312, 313, 314) étant intégrées au support (110), et situées en regard respectivement d'au moins une goutte (303, 304, 305).

13. Dispositif suivant l'une des revendications 1 à 12, les électrodes (312, 313, 314) ayant un agencement matriciel.

14. Dispositif suivant l'une des revendications 1 à 13, une ou plusieurs desdites électrodes étant intégrées à la membrane.

15. Dispositif selon l'une des revendications 1 à 14, la membrane (130) étant doté d'une ou plusieurs électrodes (510, 512, 514, 516, 518, 520) en regard d'électrodes (312, 313, 314) intégrées au support (110).

16. Dispositif suivant l'une des revendications 1 à 15, les moyens électriques comprenant : des moyens de commande de la polarisation des électrodes (112, 214, 215, 312, 313, 314).

17. Dispositif suivant la revendication 16, les moyens de commande de la polarisation des électrodes, étant aptes à placer les électrodes dans un état de polarisation dans lequel au moins une première (313) électrode est à un premier potentiel (U1), au moins une autre électrode (314) est à un deuxième potentiel différent (U2) du premier potentiel (U1).

18. Dispositif suivant l'une des revendications 1 à 17, dans lequel les électrodes (112, 214, 215, 312, 313, 314) sont recouvertes par au moins une couche diélectrique.

19. Dispositif selon l'une des revendications 1 à 18, comprenant en outre au moins un couvercle (400) en regard du support apte à maintenir l'enceinte (100) dans un espace clos (420).

20. Dispositif d'optique adaptative comprenant un dispositif d'actionnement suivant l'une des revendications 1 à 19, la membrane étant à base d'au moins un matériau transparent vis-à-vis de rayons lumineux.

21. Dispositif suivant la revendication 20, les électrodes (112) et/ou le support (110) étant à base d'au moins un matériau transparent.

22. Dispositif suivant l'une des revendications 20 ou 21, l'indice de réfraction n₁ du premier liquide (102) et l'indice de réfraction n₂ du deuxième liquide (108) étant égaux ou sensiblement égaux.

23. Dispositif d'optique adaptative comprenant un dispositif d'actionnement suivant l'une des revendications 1 à 19, la membrane (130) comprenant au moins une couche réfléchissante (500) de rayons lumineux ou étant accolée à une couche réfléchissante (500) pour les rayons lumineux.

24. Dispositif interrupteur électrique, comprenant :
- un dispositif d'actionnement suivant l'une des revendications 1 à 19,
- au moins un élément conducteur (840) de l'électricité rattaché à la membrane (730) du dispositif d'actionnement,
- au moins une première zone conductrice (842) et au moins une deuxième zone conductrice (844) disjointe de la première zone conductrice (842), la membrane (730) étant apte à adopter au moins une première position dans laquelle l'élément conducteur (840) de l'électricité est en contact avec la première zone conductrice (842) et la deuxième zone conductrice (844), et au moins une deuxième position dans laquelle la première zone conductrice et/ou la deuxième zone conductrice n'est pas en contact, ou ne sont pas en contact, avec l'élément conducteur (840).

25. Dispositif interrupteur optique, comprenant :
- un dispositif d'actionnement suivant l'une des revendications 1 à 19,
- au moins un élément (830) rattaché à la membrane (730) du dispositif d'actionnement apte à intercepter un faisceau optique, la membrane (730) étant apte à adopter au moins une première position dans laquelle ledit élément (830) intercepte un faisceau optique, et au moins une deuxième position dans laquelle ledit élément et ledit faisceau ne se rencontrent pas.

26. Dispositif de vanne, comprenant :
- un dispositif d'actionnement suivant l'une des revendications 1 à 19,
- au moins une zone (804), formant avec la membrane (730) au moins un canal (801) dans lequel au moins un fluide (802) est destiné à circuler, la membrane (730) étant apte à adopter au moins une première position dite de canal « fermé » dans laquelle la membrane (730) ou un élément (810) rattaché à la membrane (730), est en contact avec ladite zone, et au moins une deuxième position dite de canal « ouvert » dans laquelle la membrane (730) ou ledit élément (810) rattaché à la membrane n'est pas en contact avec ladite zone (804).

27. Dispositif de pompage comprenant :
- un dispositif d'actionnement suivant l'une des revendications 1 à 19,
- au moins un élément (820) formant piston rattaché à la membrane (730),
- au moins une chambre de travail (821) dans laquelle l'élément (820) formant piston est apte à se déplacer.

## Patentansprüche

1. Betätigungsvorrichtung zum Betätigen einer flexiblen Membran, enthaltend:
- einen Träger (110),
- zumindest eine mit dem Träger verbundene flexible Membran (130), die mit dem Träger zumindest einen Behälter mit dem Volumen (V) bildet, der mit zumindest einer ersten Flüssigkeit (102) in Form eines oder mehrerer Tropfen (103, 203, 204, 303, 304, 305) und mit zumindest einer zweiten Flüssigkeit (108) mit dem Volumen (V2) befüllt ist, wobei die erste Flüssigkeit und die zweite Flüssigkeit nicht mischbar sind, wobei die Vorrichtung dazu geeignet ist, mehrere Stellungen einzunehmen, darunter zumindest eine sogenannte Ruhestellung, in welcher der eine oder die mehreren Tropfen jeweils gegebene Formen haben und die Membran ein gegebenes Profil hat, wobei die Vorrichtung ferner enthält: elektrische Mittel zur Kontrolle der Form des einen bzw. der mehreren Tropfen durch Elektrobenetzung, die eine bzw. mehrere Elektroden (112, 214, 215, 312, 313, 314) enthalten, wobei die Vorrichtung dazu ausgelegt ist, dass durch eine Änderung der Form des einen bzw. der mehreren Tropfen über die elektrischen Kontrollmittel und dadurch, dass der bzw. die Tropfen mit der Membran in Kontakt gelangen und einen Druck auf die Membran ausüben, eine Änderung des Profils der flexiblen Membran bewirkt wird, die diesem Druck unterliegt.

2. Vorrichtung nach Anspruch 1, wobei die Modulation des Profils der Membran (130) mit einem im Behälter konstanten Volumen (V) der ersten Flüssigkeit und der zweiten Flüssigkeit erfolgt.

3. Vorrichtung nach Anspruch 1, wobei die Modulation des Profils der Membran (130) mit einem im Behälter variablen Volumen der zweiten Flüssigkeit erfolgt.

4. Vorrichtung nach einem der Ansprüche 1 bis 3, wobei in der Ruhestellung die Membran (130) parallel zu einer Hauptebene des Trägers (110) verläuft.

5. Vorrichtung nach einem der Ansprüche 1 bis 4, die dazu geeignet ist, zumindest eine Stellung einzunehmen, in welcher die Membran (130) ein gekrümmtes Profil hat.

6. Vorrichtung nach einem der Ansprüche 1 bis 5, die dazu geeignet ist, zumindest eine Stellung einzunehmen, in welcher zumindest ein Tropfen (203) zugleich mit dem Träger (110) und mit der Membran (130) in Kontakt ist und einen Bereich der Membran in einem gegebenen Abstand (Du) von dem Träger hält, wobei die Vorrichtung ferner dazu geeignet ist, zumindest eine weitere Stellung einzunehmen, in welcher der Tropfen zugleich mit dem Träger und mit der Membran in Kontakt ist und den Bereich der Membran in einem anderen Abstand von dem Träger hält, der sich von dem gegebenen Abstand unterscheidet.

7. Vorrichtung nach einem der Ansprüche 1 bis 6, die dazu geeignet ist, eine Stellung einzunehmen, die sich von der Ruhestellung unterscheidet, in welcher das Profil der Membran (130) sich von dem gegebenen Profil unterscheidet und in welcher zumindest ein erster Tropfen (303) zugleich mit dem Träger (110) und mit der Membran (130) in Kontakt ist und einen ersten Bereich (331) der Membran (130) in einem ersten Abstand (Du1) von dem Träger hält, zumindest ein weiterer Tropfen (304) zugleich mit dem Träger (110) und mit der Membrane (130) in Kontakt ist und einen zweiten Bereich (332) der Membran (130) in einem zweiten Abstand (Du2) von dem Träger hält, der sich von dem ersten Abstand unterscheidet.

8. Vorrichtung nach einem der Ansprüche 1 bis 7, die dazu geeignet ist, zumindest eine Stellung einzunehmen, die sich von der Ruhestellung unterscheidet, in welcher die Membran ein sinusförmiges Profil aufweist.

9. Vorrichtung nach einem der Ansprüche 1 bis 8, wobei in der Ruhestellung ein Tropfen (103) einem Bereich (131) der Membran (130) in einem Abstand von dem Träger (110) gegenüberliegt, dem sogenannten Ruheabstand (D0), ohne dabei mit der Membran (130) in Kontakt zu stehen, wobei die Vorrichtung dazu geeignet ist, zumindest eine weitere Stellung einzunehmen, in welcher der Tropfen (103) zugleich mit dem Träger und mit der Membran in Kontakt ist und den Bereich (131) der Membran in einem Abstand (Du1) von dem Träger hält, der sich von dem Ruheabstand (D0) unterscheidet.

10. Vorrichtung nach einem der Ansprüche 1 bis 9, wobei in der Ruhestellung zumindest ein Tropfen der ersten Flüssigkeit in Kontakt mit dem Träger und mit der Membran ist.

11. Vorrichtung nach einem der Ansprüche 1 bis 10, wobei in der Ruhestellung die Tropfen (103) der ersten Flüssigkeit in Kontakt mit dem Träger (110) sind und nicht in Kontakt mit der Membran (130) sind.

12. Vorrichtung nach einem der Ansprüche 1 bis 11, wobei eine oder mehrere der Elektroden (312, 313, 314) dem Träger (110) eingegliedert sind und jeweils zumindest einem Tropfen (303, 304, 305) gegenüberliegen.

13. Vorrichtung nach einem der Ansprüche 1 bis 12, wobei die Elektroden (312, 313, 314) eine Matrixanordnung haben.

14. Vorrichtung nach einem der Ansprüche 1 bis 13, wobei eine oder mehrere der Elektroden der Membran eingegliedert sind.

15. Vorrichtung nach einem der Ansprüche 1 bis 14, wobei die Membran (130) mit einer oder mehreren Elektroden (510, 512, 514, 516, 518, 520) versehen ist, die Elektroden (312, 313, 314) gegenüberliegen, die dem Träger (110) eingegliedert sind.

16. Vorrichtung nach einem der Ansprüche 1 bis 15, wobei die elektrischen Mittel enthalten: Mittel zum Steuern der Polarisierung der Elektroden (112, 214, 215, 312, 313, 314).

17. Vorrichtung nach Anspruch 16, wobei die Mittel zum Steuern der Polarisierung der Elektroden dazu geeignet sind, die Elektroden in einen Polarisierungszustand zu bringen, in welchem zumindest einer ersten Elektrode (313) ein erstes Potential (U1) anliegt, und zumindest einer weiteren Elektrode (314) ein zweites Potential (U2) anliegt, das sich von dem ersten Potential (U1) unterscheidet.

18. Vorrichtung nach einem der Ansprüche 1 bis 17, wobei die Elektroden (112, 214, 215, 312, 313, 314) mit zumindest einer dielektrischen Schicht überzogen sind.

19. Vorrichtung nach einem der Ansprüche 1 bis 18, ferner enthaltend zumindest eine dem Träger gegenüberliegende Abdeckung (400), die dazu geeignet ist, den Behälter (100) in einem geschlossenen Raum (420) zu halten.

20. Vorrichtung zur adaptiven Optik, enthaltend eine Betätigungsvorrichtung nach einem der Ansprüche 1 bis 19, wobei die Membran auf Basis von zumindest einem gegenüber Lichtstrahlen transparenten Material besteht.

21. Vorrichtung nach Anspruch 20, wobei die Elektroden (112) und/oder der Träger (110) auf Basis von zumindest einem transparenten Material bestehen.

22. Vorrichtung nach einem der Ansprüche 20 oder 21, wobei der Brechungsindex n₁ der ersten Flüssigkeit (102) und der Brechungsindex n₂ der zweiten Flüssigkeit (108) gleich bzw. im Wesentlichen gleich sind.

23. Vorrichtung zur adaptiven Optik, enthaltend eine Betätigungsvorrichtung nach einem der Ansprüche 1 bis 19, wobei die Membran (130) zumindest eine Lichtstrahlen reflektierende Schicht (500) aufweist oder an eine Lichtstrahlen reflektierende Schicht (500) angefügt ist.

24. Elektrische Schaltvorrichtung, enthaltend:
- eine Betätigungsvorrichtung nach einem der Ansprüche 1 bis 19,
- zumindest ein stromleitendes Element (840), das mit der Membran (730) der Betätigungsvorrichtung verbunden ist,
- zumindest einen ersten leitfähigen Bereich (842) und zumindest einen zweiten leitfähigen Bereich (844), der von dem ersten leitfähigen Bereich (842) getrennt ist, wobei die Membran (730) dazu geeignet ist, zumindest eine erste Stellung einzunehmen, in welcher das stromleitende Element (840) mit dem ersten leitfähigen Bereich (842) und dem zweiten leitfähigen Bereich (844) in Kontakt ist, sowie zumindest eine zweite Stellung, in welcher der erste leitfähige Bereich und/oder der zweite leitfähige Bereich nicht mit dem leitenden Element (840) in Kontakt ist bzw. sind.

25. Optische Schaltvorrichtung, enthaltend:
- eine Betätigungsvorrichtung nach einem der Ansprüche 1 bis 19,
- zumindest ein Element (830), das mit der Membran (730) der Betätigungsvorrichtung verbunden ist und einen optischen Strahl auffangen kann, wobei die Membran (730) dazu geeignet ist, zumindest eine erste Stellung einzunehmen, in welcher das Element (830) den optischen Strahl auffängt, sowie zumindest eine zweite Stellung, in welcher das Element und der Strahl nicht aufeinandertreffen.

26. Ventilvorrichtung, enthaltend:
- eine Betätigungsvorrichtung nach einem der Ansprüche 1 bis 19,
- zumindest einen Bereich (804), der mit der Membran (730) zumindest einen Kanal (801) bildet, in welchem zumindest ein Medium (802) strömen soll, wobei die Membran (730) dazu geeignet ist, zumindest eine erste Stellung einzunehmen, die sogenannte Kanalschließstellung, in welcher die Membran (730) bzw. ein mit der Membran (730) verbundenes Element (810) mit dem Bereich in Kontakt ist, sowie zumindest eine zweite Stellung, die sogenannte Kanaloffenstellung, in welcher die Membran (730) bzw. das mit dem Membran verbundene Element (810) nicht mit dem Bereich (804) in Kontakt ist.

27. Pumpvorrichtung, enthaltend:
- eine Betätigungsvorrichtung nach einem der Ansprüche 1 bis 19,
- zumindest ein kolbenartiges Element (820), das mit der Membran (730) verbunden ist,
- zumindest eine Arbeitskammer (821), in welcher das kolbenartige Element (820) sich verlagern kann.

## Claims

1. Actuation device comprising:
- a support (110),
- at least one flexible membrane (130) attached to the support, cooperating with the support to form at least one containment with volume (V) filled with at least one first liquid (102) in the form of one or several drops (103, 203, 204, 303, 304, 305) and at least one second liquid (108) with volume (V2), the first liquid and the second liquid being immiscible, the device being capable of adopting several positions including at least one so-called "rest" position in which said one or several drops have given corresponding shapes and the membrane has a given profile, the device further comprising electrical means for controlling by electro-wetting the shape of at or several drops, the electrical means comprising one or several electrodes (112, 214, 215, 312, 313, 314), the device being configured such that the modification of the shape of said one or several drops by the electrical means causes the contacting of said one or several drops with the membrane so as to exert a pressure on the membrane, this pression causing a modification of the membrane profile.

2. Device according to claim 1, the profile of the membrane (130) being modulated with a constant volume (V) of the first liquid and the second liquid in the containment.

3. Device according to claim 1, the profile of the membrane (130) being modulated with a variable volume of the second liquid in the containment.

4. Device according to one of claims 1 to 3, in which the membrane (130) is parallel to a principal plane of the support (110).

5. Device according to one of claims 1 to 4, that can adopt at least one position in which the membrane (130) comprises a curved profile.

6. Device according to one of claims 1 to 5, that can adopt at least one position in which at least one drop (203) is in contact both with the (110) and the membrane (130) and holds a zone of the membrane at a given distance (Du) from the support, the device also being capable of adopting at least one other position in which said drop is in contact both with the support and the membrane, and holds said zone of the membrane at another distance from the support different from said given distance.

7. Device according to one of claims 1 to 6, that can adopt a position different from the rest position in which the profile of the membrane (130) is different from said given profile in which at least one first drop (303) is in contact both with the support (110) and the membrane (130) and holds a first zone (331) of the membrane (130) at a first distance (Du1) from the support, at least one other drop (304) is in contact both with the support (110) and the membrane (130) and holds a second zone (332) of the membrane (130) at a second distance (Du2) from the support, different from the first distance.

8. Device according to one of claims 1 to 7, that can adopt at least one position different from the rest position in which the membrane comprises a sinuous profile.

9. Device according to one of claims 1 to 8, in which in the rest position, a drop (103) is located facing a zone (131) of the membrane (130) at a distance from the support (110) called the "rest distance" (DO) without being in contact with the membrane (130), the device being capable of adopting at least one other position in which said drop (103) is in contact both with the support and the membrane, and holds said membrane zone (131) at a distance (Du1) from the support different from said rest distance (DO).

10. Device according to one of claims 1 to 9, in which, in the rest position, at least one drop of the first liquid is in contact with the support and with the membrane.

11. Device according to one of claims 1 to 10, in which, in the rest position, the drops (103) of the first liquid are in contact with the support (110) and are not in contact with the membrane (130).

12. Device according to one of claims 1 to 11, one or several of said electrodes (312, 313, 314) being integrated into the support (110), and facing at least one drop (303, 304, 305).

13. Device according to one of claims 1 to 12, the electrodes (312, 313, 314) being arranged as a matrix.

14. Device according to one of claims 1 to 13, one or several of said electrodes being integrated into the membrane.

15. Device according to one of claims 1 to 14, the membrane (130) being provided with one or several electrodes (510, 512, 514, 516, 518, 520) facing electrodes (312, 313, 314) integrated into the support (110).

16. Device according to one of claims 1 to 15, the electrical means comprising means of controlling the polarisation of the electrodes (112, 214, 215, 312, 313, 314).

17. Device according to claim 16, the means of controlling the polarisation of the electrodes being capable of putting the electrodes in a polarisation state in which at least one first electrode (313) is at a first potential (U1), at least one other electrode (314) is at a second potential (U2) different from the first potential (U1).

18. Device according to one of claims 1 to 17, in which the electrodes (112, 214, 215, 312, 313, 314) are covered by at least one dielectric layer.

19. Device according to one of claims 1 to 18, also comprising at least one cover (400) facing the support and capable of holding the containment (100) in a closed space (420).

20. Adaptative optical device comprising an actuation device according to one of claims 1 to 19, the membrane being based on at least one material transparent to light rays.

21. Device according to claim 20, the electrodes (112) and/or the support (110) being based on at least one transparent material.

22. Device according to one of claims 20 or 21, the refraction index n₁ of the first liquid (102) and the refraction index n₂ of the second liquid (108) being equal or approximately equal.

23. Adaptative optical device comprising an actuation device according to one of claims 1 to 19, the membrane (130) comprising at least one reflecting layer (500) of light rays or being coupled with a reflecting layer (500) for light rays.

24. Electrical switch device comprising:
- an actuation device according to one of claims 1 to 19,
- at least one electricity conducting element (840) attached to the membrane (730) of the actuation device,
- at least one first conducting zone (842) and at least one second conducting zone (844) separate from the first conducting zone (842), the membrane (730) being capable of adopting at least one first position in which the electricity conducting element (840) is in contact with the first conducting zone (842) and the second conducting zone (844), and at least one second position in which the first conducting zone and/or the second conducting zone is not in contact, or are not in contact, with the conducting element (840).

25. Optical switch device comprising:
- an actuation device according to one of claims 1 to 19,
- at least one element (830) attached to the membrane (730) of the actuation device capable of intercepting an optical beam, the membrane (730) being capable of adopting at least one first position in which said element (830) intercepts an optical beam, and at least one second position in which said element and said beam do not intersect.

26. Valve device comprising:
- an actuation device according to one of claims 1 to 19,
- at least one zone (804), forming a channel (801) with the membrane (730) in which at least one fluid (802) will circulate, the membrane (730) being capable of adopting at least one first position called the "closed" channel in which the membrane (730) or an element (810) attached to the membrane (730), is in contact with said zone, and at least one second position called the "open" channel in which the membrane (730) or said element (810) attached to the membrane is not in contact with said zone (804).

27. Pumping device comprising:
- an actuation device according to one of claims 1 to 19,
- at least one element (820) forming a piston attached to the membrane (730),
- at least one work chamber (821) in which the element (820) forming a piston is capable of moving.
